# EUROPEAN PATENT APPLICATION

(11) **EP 1 698 478 A1**
(43) Date of publication of application: **06.09.2006**
(21) Application number: 04807743.2
(22) Date of filing: 24.12.2004
(51) Int. Cl.: B41M 5/26, G11B 7/24, C09B 57/00

(54) **OPTICAL RECORDING MEDIUM AND DYE**

(30) Priority: 26.12.2003 JP 2003433328
(71) Applicant: MITSUBISHI CHEMICAL CORPORATION, Tokyo 108-0014 (JP); Mitsubishi Kagaku Media Co., Ltd., Tokyo 108-0014 (JP)
(72) Inventor: MIYAZAWA, Takashi Mitsubishi Kagaku Media Co., Ltd, Tokyo 1080014 (JP); KUROSE, Yutaka Mitsubishi Kagaku Media Co., Ltd., Tokyo 1080014 (JP)
(74) Representative: TER MEER - STEINMEISTER & PARTNER GbR
(86) International application number: PCT/JP2004/019387
(87) International publication number: WO 2005/063494

(57) **Abstract**

To provide an optical recording medium capable of high density recording or readout of optical information by a laser beam having a short wavelength.

An optical recording medium comprising a substrate and a recording layer formed on the substrate, capable of recording or readout of information by irradiation with light, wherein the recording layer contains a 7-aminocarbostyril compound of the following formula (I): 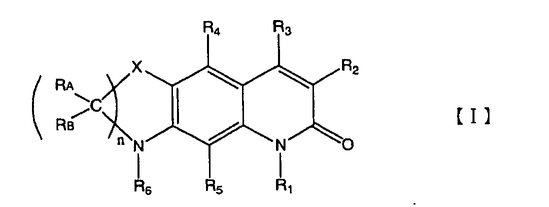 in the formula (I), X is an oxygen atom or a sulfur atom, R₁ is a hydrogen atom or a linear or branched alkyl group which may be substituted, R₆ is a linear or branched alkyl group which may be substituted, and n=1 to 4.

## Description

### TECHNICAL FIELD

The present invention relates to an optical recording medium, etc. More particularly, it relates to an optical recording medium, etc. which can be adapted to blue laser.

### BACKGROUND ART

At present, various optical recording media such as CD-R/RW, DVD-R/RW and MO have been widely recognized and used as external memory devices for information processors such as computers, since they can record a large amount of information, and random access is easy with them. Among them, an organic dye type optical recording medium having a recording layer containing an organic dye compound, represented by CD-R or DVD-R, is considered to be superior in that it can be easily produced at a low cost.

On the other hand, along with an increase of the amount of information to be handled, it is desired to increase the recording density of media. In recent years, an optical recording medium has been proposed on which high density recording/readout can be carried out by using a laser beam with a short oscillation wavelength, such as a blue laser beam which has been remarkably developed.

However, in general, in the case of an optical recording medium commercially available as CD-R, DVD-R or the like, for example, CD-R is designed to be suitable for recording/readout by a laser beam having a wavelength at a level of 780 nm, and DVD-R is designed to be suitable for recording/readout by a laser beam having a wavelength at a level of from 600 to 700 nm. Such a recording medium suitable for optical recording/readout by using a laser beam having a relatively long wavelength has such a problem that when recording/readout is carried out by using a laser beam with a shorter wavelength, the reflectance tends to be low, and recording/readout can not be carried out.

With a view to employing a laser beam with a short wavelength for such recording/readout of optical information, also with respect to an organic dye compound to be used for a recording layer of an optical recording medium, a study has been made on a dye having an absorption characteristic at a wavelength shorter than the wavelength of a laser beam which has heretofore been employed, and an optical recording medium employing such a dye for the recording layer has been reported (Patent Document 1). Further, also the present applicants have proposed an optical recording medium wherein a carbostyril compound having a specific molecular structure is incorporated in a recording layer (Patent Document 2).
Patent Document 1: JP-A-2001-096918
Patent Document 2: JP-A-2003-127542

### DISCLOSURE OF THE INVENTION

### PROBLEM TO BE SOLVED BY THE INVENTION

In the optical recording medium disclosed in Patent Document 1 or 2, a carbostyril compound having an amino group at the 7-position, is used as a dye. However, there is a problem such that this dye tends to be crystallized during the formation of the recording layer, whereby optical information can not sufficiently be recorded or readout.

Further, in the absorption spectrum of the coating film containing this dye, the maximum absorption wavelength (λmax) is observed at a level of from 345 to 375 nm, but no substantial absorption spectrum, is observed in the vicinity of 405 nm i.e. at a longer wavelength side of the absorption spectrum. Therefore, there is a problem that the sensitivity to a blue laser beam tends to be low.

Thus, the present invention has been made to solve such problems that have become apparent during the development of an optical recording medium for high density recording/readout of optical information by a blue laser beam with a short wavelength.

Namely, it is an object of the present invention to provide an optical recording medium which is capable of high density recording/readout of optical information by a laser beam with a short wavelength.

### MEANS TO SOLVE THE PROBLEMS

To solve such problems, in the present invention, a carbostyril compound having a condensed ring containing an amino group and a hetero atom in its molecule, is used as a dye. Namely, the present invention provides an optical recording medium comprising a substrate and a recording layer formed on the substrate, capable of recording or readout of information by irradiation with light, wherein the recording layer contains a 7-aminocarbostyril compound of the following formula (I): 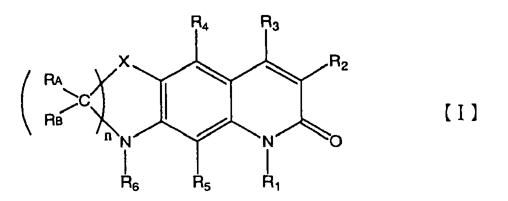 in the formula (I), X is an oxygen atom, a sulfur atom or NR₇, each of R₁, R₆ and R₇ which are independent of one another, is a hydrogen atom, a linear or branched alkyl group, a cyclic alkyl group, an aralkyl group, a linear or branched alkenyl group or an acyl group of -COR₁₆, R₁₆ is a hydrocarbon group or a heterocyclic group, each of R₂, R₃ R₄ and R₅ which are independent of one another, is a hydrogen atom or an optional substituent, each of R_{A} and R_{B} which are independent of each other, is a hydrogen atom, a C₁₋₁₂ linear or branched alkyl group, n is from 1 to 4, A in R_{A} is an even number among from 8 to 7+2n, B in R_{B} is an odd number among from 8 to 7+2n, and when n is from 2 to 4, the plurality of each of R_{A} and R_{B} may be different from one another, provided that among from R₁ to R₇, adjacent substituents may be bonded to each other to form a condensed ring.

In the optical recording medium of the present invention, it is preferred that in the 7-aminocarbostyril compound of the following formula (I), each of R₁, R₆ and R₇ which are independent of one another, is selected from the group consisting of a hydrogen atom, a C₁₋₁₂ linear or branched alkyl group, a C₃₋₁₂ cyclic alkyl group, an acyl group of -COR₁₆ and a C₇₋₁₈ aralkyl group.

Further, it is preferred that in the 7-aminocarbostyril compound of the following formula (I), each of R₂, R₃ R₄ and R₅ which are independent of one another, is selected from the group consisting of a hydrogen atom, a C₁₋₁₂ linear or branched alkyl group, a C₃₋₁₂ cyclic alkyl group, a C₂₋₁₂ linear or branched alkenyl group, a C₇₋₁₈ aralkyl group, a C₁₋₁₂ linear or branched alkoxy group, a C₁₋₁₂ linear or branched alkylthio group, a C₆₋₁₈ aryl group, a saturated or unsaturated heterocyclic group, a halogen atom, a nitro group, a cyano group, a mercapto group, a hydroxyl group, a formyl group, an acyl group of -COR₁₆, an amino group of -NR₁₇R₁₈, an acylamino group of -NHCOR₁₉, a carbamate group of -NHCOOR₂₀, a carboxylate group of -COOR₂₁, an acyloxy group of -OCOR₂₂, a carbamoyl group of -CONR₂₃R₂₄. a sulfonyl group of -SO₂R₂₅, a sulfinyl group of -SOR₂₆, a sulfamoyl group of -SO₂NR₂₇R₂₈, a sulfonate group of - S0₃R₂₉ and a sulfonamide group of -NHSO₂R₃₀ (wherein each of R₁₆, R₁₉, R₂₀, R₂₁, R₂₂, R₂₅, R₂₆, R₂₉ and R₃₀ is a hydrocarbon group or a heterocyclic group, and each of R₁₇, R₁₈, R₂₃, R₂₄, R₂₇ and R₂₈ is a hydrogen atom, a hydrocarbon group or a heterocyclic group), and among from R₁ to R₇, adjacent substituents may be bonded to each other to form a condensed ring.

Further, it is preferred that in the 7-aminocarbostyril compound of the following formula (I), each of R₂ and R₃ which are independent of each other, is selected from the group consisting of a hydrogen atom, a C₁₋₈ linear or branched alkyl group, a C₃₋₈ cyclic alkyl group, a C₇₋₁₂ aralkyl group, a C₁₋₈ linear or branched alkoxy group, a C₁₋₈ linear or branched alkylthio group, a C₆₋₁₈ aryl group, a saturated or unsaturated single ring or double condensed ring heterocyclic group, a halogen atom, a nitro group, a cyano group, a mercapto group, a hydroxyl group, a formyl group, an acyl group of -COR₁₆, an amino group of -NR₁₇R₁₈, an acylamino group of -NHCOR₁₉, a carbamate group of -NHCOOR₂₀, a carboxylate group of - COOR₂₁, an acyloxy group of -OCOR₂₂, a carbamoyl group of -CONR₂₃R₂₄ and a sulfonamide group of -NHSO₂R₃₀.

Further, it is preferred that in the 7-aminocarbostyril compound of the following formula (I), n is from 2 to 3.

Further, it is preferred that in the 7-aminocarbostyril compound of the following formula (I), X is an oxygen atom or NR₇.

Further, it is preferred that in the 7-aminocarbostyril compound of the following formula (I), n is 2.

Further, it is preferred that in the 7-aminocarbostyril compound of the following formula (I), X is an oxygen atom or NR₇, R₁ is a hydrogen atom or a C₁₋₈ linear or branched alkyl group, each of R₆ and R₇ which are independent of each other, is a C₁₋₈ linear or branched alkyl group or a C₃₋₁₀ cyclic alkyl group, and n is 2.

Further, in the optical recording medium of the present invention, the light for recording and readout of information, is preferably a laser beam having a wavelength of from 350 to 530 nm.

On the other hand, the present invention may be regarded as a dye comprising a 7-aminocarbostyril compound of the above formula (I). In the dye of the present invention, the 7-aminocarbostyril compound is of the above formula (I) wherein X is an oxygen atom or NR₇, R₁ is a hydrogen atom or a C₁₋₄ linear or branched alkyl group, each of R₂ and R₃ which are independent of each other, is a hydrogen atom, a C₁₋₈ linear or branched alkyl group, a C₁₋₈ linear or branched alkoxy group, a halogen atom, a C₇₋₁₂ aralkyl group, an unsaturated heterocyclic group or an aryl group, each of R₄ and R₅ is a hydrogen atom, each of R₆ and R₇ which are independent of each other, is an unsaturated C₁₋₈ linear or branched alkyl group or a cyclic alkyl group, each of R_{A} and R_{B} which are independent of each other, is a hydrogen atom, a C₁₋₁₂ linear or branched alkyl group, n is from 1 to 4, A in R_{A} is an even number among from 8 to 7+2n, B in R_{B} is an odd number among from 8 to 7+2n, and when n is from 2 to 4, the plurality of each of R_{A} and R_{B} may be different from one another, provided that among from R₁ to R₇, adjacent substituents may be bonded to each other to form a condensed ring. Further, it is preferred that n=2, whereby the compound can be used as a chemically stable dye.

### EFFECT OF THE INVENTION

According to the present invention, an optical recording medium will be presented which is capable of high density recording/readout of optical information by a laser beam with a short wavelength.

### BRIEF DESCRIPTION OF THE DRAWINGS

Figs. 1 are views illustrating optical recording media as specific embodiments of the present invention. Fig. 1(a) illustrates a first embodiment, and Fig. 1(b) illustrates a second embodiment.
Fig. 2 is a measured spectrum of absorption wavelength of a coating film in Example 2.
Fig. 3 is a measured spectrum of absorption wavelength of a coating film in Comparative Example 1.
Fig. 4 is a measured spectrum of absorption wavelength of a coating film in Comparative Example 2.
Fig. 5 is a measured spectrum of absorption wavelength of a coating film in Example 16.
Fig. 6 is a measured spectrum of absorption wavelength of a coating film in Comparative Example 3.
Fig. 7 is a measured spectrum of absorption wavelength of a coating film in Comparative Example 4.

### MEANINGS OF SYMBOLS

1: a substrate, 2: a recording layer, 3: a reflective layer, 4: a protective layer, 5: a protective coating, 10, 20: optical recording media

### BEST MODE FOR CARRYING OUT THE INVENTION

Now, the best mode for carrying out the present invention (hereinafter referred to as the practical mode) will be described in detail.

The 7-aminocarbostyril compound of the above formula (I) to be used for the optical recording medium to which the present practical mode is applied, has a proper absorption in a blue light region of from 350 nm to 530 nm and is a dye compound suitable for recording by a blue laser beam.

For such purpose, it is firstly required to dissolve such a compound in a solvent suitable for a dye for an optical disk. Accordingly, for the purpose of the present invention, the substituent expressed by such a term as "may be substituted as the case requires" or "may be substituted" or "an optional substituent" does not include a water-soluble group such as a sulfonic group or a carboxylic group. Further, a proper amount of absorption is required at a wavelength of light for recording/readout. The above substituent may be suitably selected from the viewpoint of the absorptivity at a wavelength of light for recording/readout or the dissolving power of the above solvent.

In such a 7-aminocarbostyril compound of the above formula (I), X is an oxygen atom, a sulfur atom or -NR₇. Here, each of R₁, R₆ and R₇ which are independent of one another, is a hydrogen atom, a linear or branched alkyl group, a cyclic alkyl group, an aralkyl group, a linear or branched alkenyl group or an acyl group of -COR₁₆. Here, the alkyl group, the cyclic alkyl group, the aralkyl group, the alkenyl group and the acyl group may be substituted, as the case requires.

In the formula (I), each of R₁, R₆ and R₇ is preferably a hydrogen atom, a C₁₋₁₂ linear or branched alkyl group, a C₃₋₁₂ cyclic alkyl group which may be substituted, an acyl group of -COR₁₆ or a C₇₋₁₈ aralkyl group which may be substituted. Among them, particularly preferred is a hydrogen atom, a C₁₋₁₂ linear or branched alkyl group, a C₃₋₁₀ cyclic alkyl group which may be substituted, or a C₇₋₁₈ aralkyl group.

Particularly, with respect to R₆ and R₇, λmax will shift to a long wavelength side by an increase of the electron donative property of the amino group, and each of them is particularly preferably an unsubstituted linear or branched alkyl group or a cyclic alkyl group. However, if the carbon number is too large, no corresponding effect will be observed from the viewpoint of the wavelength, and inversely, there will be a problem such that the absorption intensity lowers, and the formed product tends not to be solidified. Accordingly, the carbon number is particularly preferably from 1 to about 8.

Each of R₂, R₃, R₄ and R₅ which are independent of one another, is a hydrogen atom or an optional substituent. Such an optional substituent may, for example, be a C₁₋₁₈ linear or branched alkyl group such as a methyl group, an ethyl group, a propyl group, an isopropyl group, a n-butyl group, a sec-butyl group, a tert-butyl group or a n-heptyl group; a C₃₋₁₈ cyclic alkyl group such as a cyclopropyl group, a cyclopentyl group, a cyclohexyl group or an adamantyl group; a C₂₋₁₈ linear or branched alkenyl group such as a vinyl group, a propenyl group or a hexenyl group; a C₃₋₁₈ cyclic alkenyl group such as a cyclopentenyl group or a cyclohexenyl group; a heterocyclic group such as a 2-thienyl group, a 2-pyridyl group, a 4-piperidyl group or a morpholino group; a C₆₋₁₈ aryl group such as a phenyl group, a tolyl group, a xylyl group, a mesityl group or a naphthyl group; a C₇₋₂₀ aralkyl group such as a benzyl group or a phenethyl group; a C₁₋₁₈ linear or branched alkoxy group such as a methoxy group, an ethoxy group, a n-propoxy group, an isopropoxy group, a n-butoxy group, a sec-butoxy group or a tert-butoxy group; a C₃₋₁₈ linear or branched alkenyloxy group such as a propenyloxy group, a butenyloxy group or a pentenyloxy group; or a C₁₋₁₈ linear or branched alkylthio group such as a methylthio group, an ethylthio group, a n-propylthio group, a n-butylthio group, a secbutylthio group or a tert-butylthio group. Here, the alkyl group, the cyclic alkyl group, the alkenyl group, the cyclic alkenyl group, the heterocyclic group, the aryl group, the aralkyl group, the alkoxy group, the alkenyloxy group and the alkylthio group may be substituted, as the case requires.

Other specific examples for each of R₂, R₃, R₄ and R₅ include a halogen atom such as a fluorine atom, a chlorine atom or a bromine atom; a nitro group; a nitroso group; a cyano group; an isocyano group; a cyanato group; an isocyanato group; a thiocyanato group; an isothiocyanato group; a mercapto group; a hydroxyl group; a hydroxyamino group; a formyl group; a sulfonic group; a carboxyl group; an acyl group of -COR₁₆; an amino group of -NR₁₇R₁₈; an acylamino group of -NHCOR₁₉; a carbamate group of -NHCOOR₂₀; a carboxylate group of -COOR₂₁; an acyloxy group of -OCOR₂₂; a carbamoyl group of -CONR₂₃R₂₄; a sulfonyl group of -SO₂R₂₅; a sulfinyl group of -SOR₂₆; a sulfamoyl group of -SO₂NR₂₇R₂₈; a sulfonate group of -SO₃R₂₉; and a sulfonamide group of -NHSO₂R₃₀.

These substituents may further be substituted, as the case requires. In such a case, the positions of substituents are not particularly limited, and the number of substituents may be within a range of from 1 to 4. When a plurality of substituents are present, they may be the same or different.

Here, each of R₁₆, R₁₉, R₂₀, R₂₁, R₂₂, R₂₅, R₂₆, R₂₉ and R₃₀ is a hydrocarbon group or a heterocyclic group, and each of R₁₇, R₁₈, R₂₃, R₂₄, R₂₇ and R₂₈ is a hydrogen atom, a hydrocarbon group or a heterocyclic group. Here, the hydrocarbon group and the heterocyclic group may be substituted as the case requires.

The hydrocarbon group for R₁₆ to R₃₀ may, for example, be a C₁₋₁₈ linear or branched alkyl group such as a methyl group, an ethyl group, a propyl group, an isopropyl group, a n-butyl group, a sec-butyl group, a tert-butyl group or a n-heptyl group; a C₃₋₁₈ cyclic alkyl group such as a cyclopropyl group, a cyclopentyl group, a cyclohexyl group or an adamantyl group; a C₂₋₁₈ linear or branched alkenyl group such as a vinyl group, a propenyl group or a hexenyl group; a C₃₋₁₈ cyclic alkenyl group such as a cyclopentenyl group or a cyclohexenyl group; a C₇₋₂₀ aralkyl group such as a benzyl group or a phenethyl group; or a C₆₋₁₈ aryl group such as a phenyl group, a tolyl group, a xylyl group or a mesityl group. The alkyl chain portion and the aryl group portion of these groups may further be substituted by substituents which the after-mentioned alkyl chain portion of R₂ to R₅ may have.

Further, the heterocyclic group for R₁₆ to R₃₀ may, for example, be a saturated heterocyclic group such as a 4-piperidyl group, a morpholino group, a 2-morpholinyl group or a piperazyl group, or an aromatic heterocyclic group such as a 2-furyl group, a 2-pyridyl group, a 2-thiazolyl group or a 2-quinolyl group. These heterocyclic groups may contain a plurality of hetero atoms or may further have substituents, and positions of such substituents are not limited. As the heterocyclic group, one having a preferred structure is a 5- or 6-membered saturated heterocyclic group, or a 5- or 6-membered single ring or double condensed ring aromatic heterocycle group.

Specifically, as the acyl group (-COR₁₆), substituents having the following structures may be mentioned:

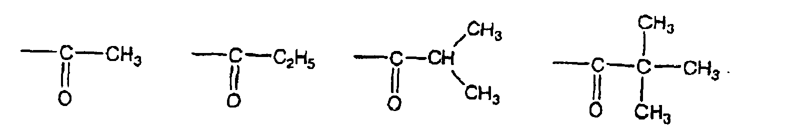

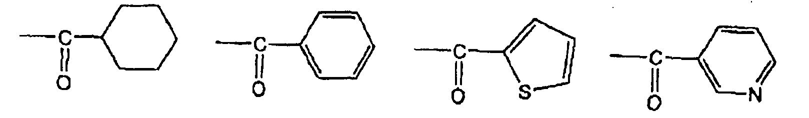

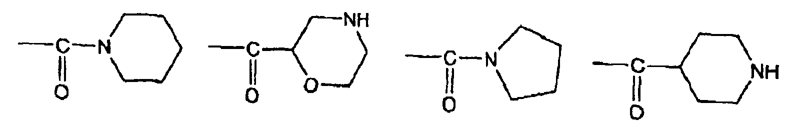

As the amino group (-NR₁₇R₁₈), substituents having the following structures may be mentioned:

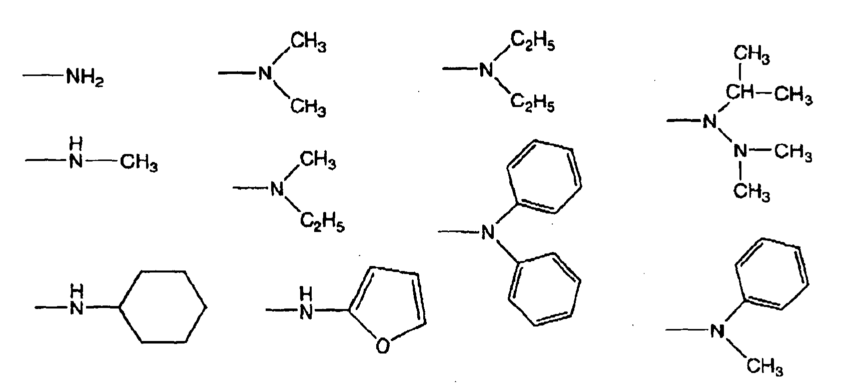

As the acylamino group (-NRCOOR₁₉), substituents having the following structures may be mentioned:

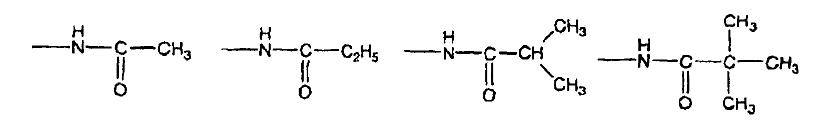

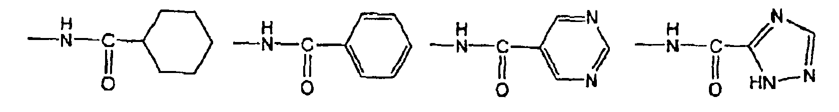

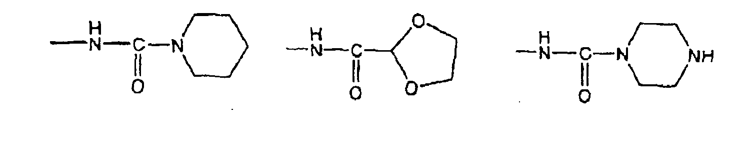

As the carbamate group (-NRCOOR₂₀), substituents having the following structures may be mentioned:

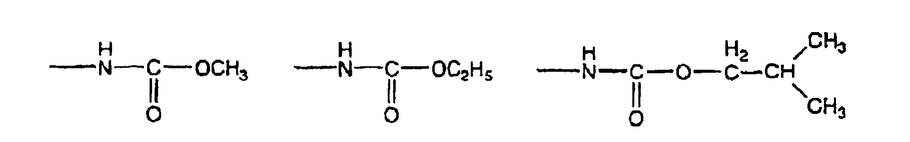

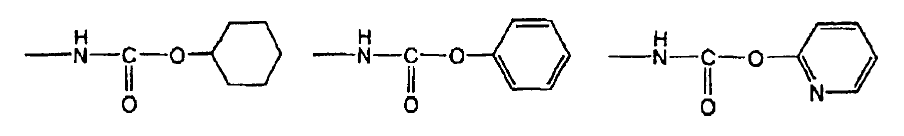

As the carboxylate group (-NRCOOR21), substituents having the following structures may be mentioned:

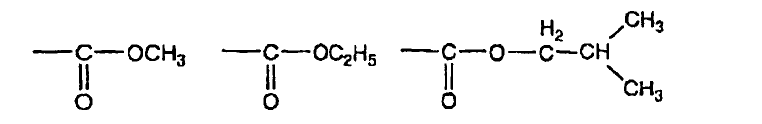

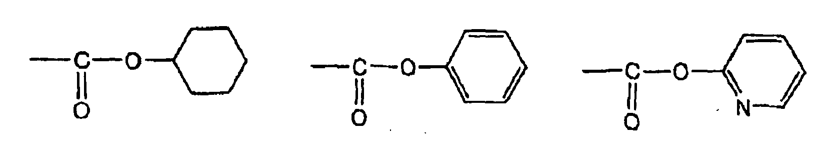

As the acyloxy group (-OCOR₂₂), substituents having the following structures may be mentioned:

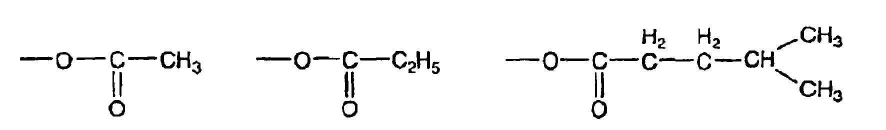

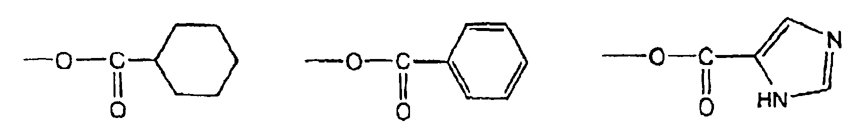

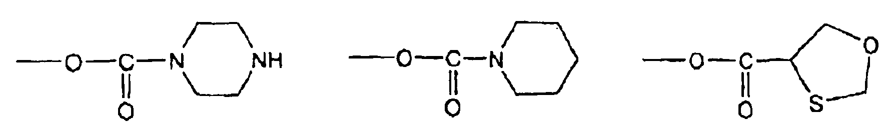

As the carbamoyl group (-CONR₂₃R₂₄), substituents having the following structures may be mentioned:

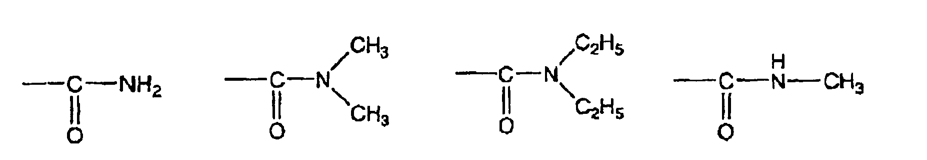

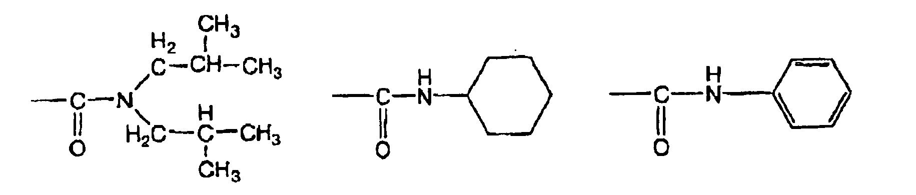

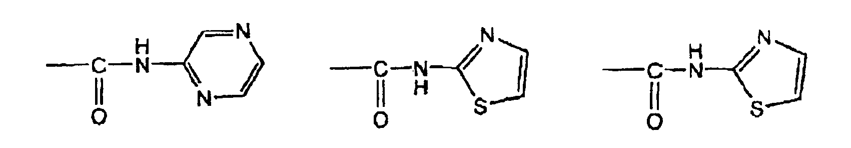

As the sulfonyl group (-SO₂R₂₅), substituents having the following structures may be mentioned:

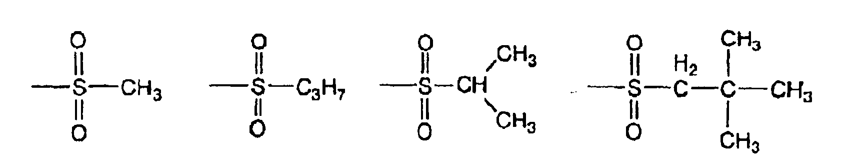

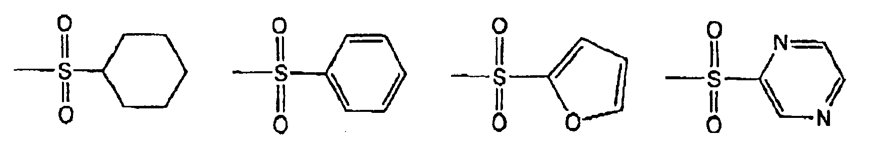

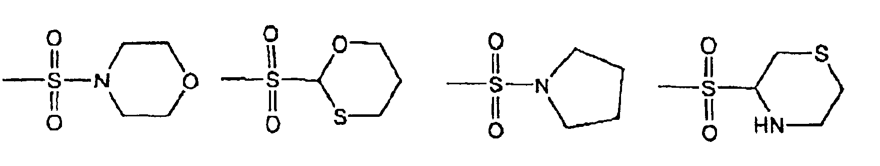

As the sulfinyl group (-SOR₂₆), substituents having the following structures may be mentioned:

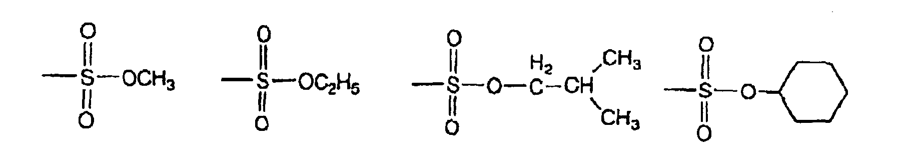

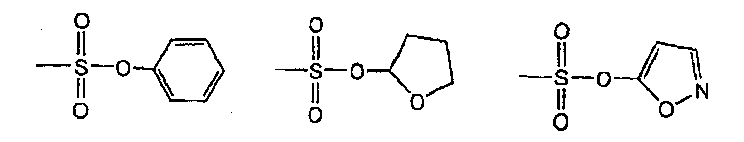

As the sulfamoyl group (-SO₂NR₂₇R₂₈), substituents having the following structures may be mentioned:

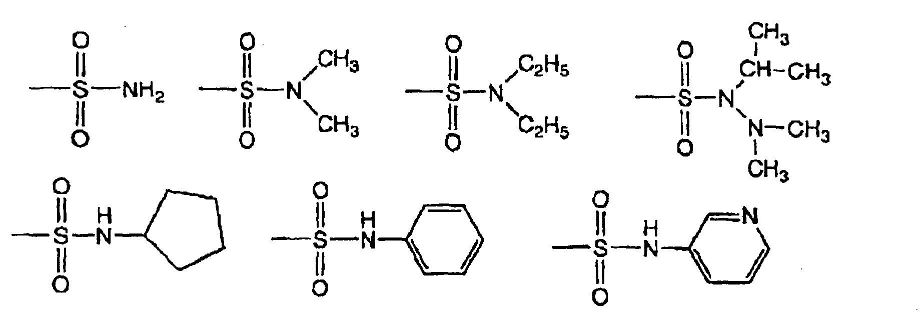

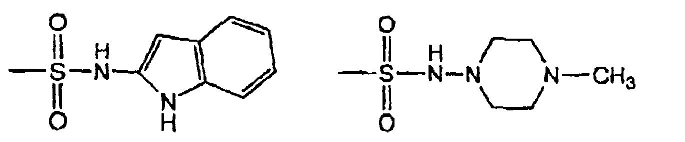

As the sulfonate group (-SO₃R₂₉), substituents having the following structures may be mentioned:

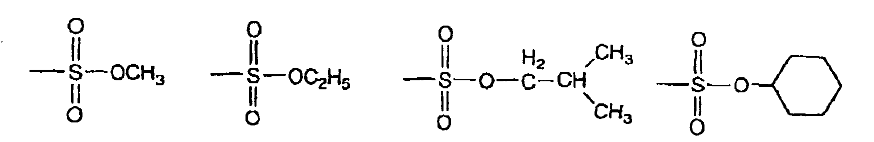

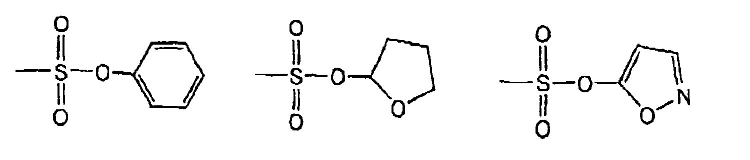

As the sulfonamide group (-NHSO₂R₃₀), substituents having the following structures may be mentioned:

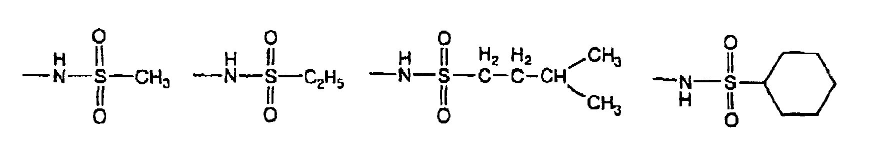

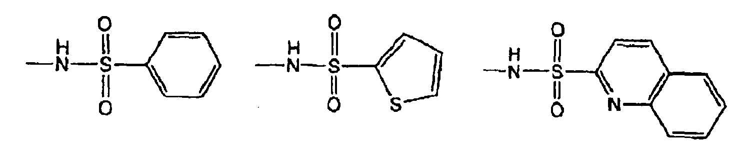

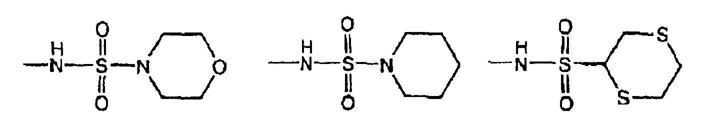

Further, in the formula (I), each of R₂, R₃, R₄ and R₅ is preferably a hydrogen atom, a C₁₋₁₂ linear or branched alkyl group which may have a substituent, a C₃₋₁₂ cyclic alkyl group which may have a substituent, a C₂₋₁₂ linear or branched alkenyl group which may have a substituent, a C₇₋₁₈ aralkyl group which may have a substituent, a C₁₋₁₂ linear or branched alkoxyl group which may have a substituent, a C₁₋₁₂ linear or branched alkylthio group which may have a substituent, a C₆₋₁₈ aryl group which may have a substituent, a saturated or an unsaturated heterocyclic group which may have a substituent, a halogen atom, a nitro group, a cyano group, a mercapto group, a formyl group, a hydroxyl group, a formyl group, an acyl group of -COR₁₆, an amino group of -NR₁₇R₁₈, an acylamino group of -NHCOR₁₉, a carbamate group of -NHCOOR₂₀, a carboxylate group of -COOR₂₁, an acyloxy group of -OCOR₂₂, a carbamoyl group of -CONR₂₃R₂₄, a sulfonyl group of -SO₂R₂₅, a sulfinyl group of -SOR₂₆, a sulfamoyl group of -SO₂NR₂₇R₂₈, a sulfonate group of -SO₃R₂₉ or a sulfonamide group of -NHSO₂R₃₀.

Particularly, in the formula (I), each of R₂ and R₃ is particularly preferably selected from a hydrogen atom, a C₁₋₈ linear or branched alkyl group, a C₃₋₈ cyclic alkyl group, a C₇₋₁₂ aralkyl group, a C₁₋₈ linear or branched alkoxy group, a C₁₋₈ linear or branched alkylthio group, a C₆₋₁₈ aryl group, a saturated or unsaturated single ring or double condensed ring heterocyclic group, a halogen atom, a nitro group, a cyano group, a mercapto group, a hydroxyl group, a formyl group, an acyl group of -COR₁₆, an amino group of -NR₁₇R₁₈, an acylamino group of -NHCOR₁₉, a carbamate group of -NHCOOR₂₀, a carboxylate group of -COOR₂₁, an acyloxy group of -OCOR₂₂, a carbamoyl group of -CONR₂₃R₂₄, and a sulfonamide group of -NHSO₂R₃₀. These substituents are useful from the viewpoint of the effect to increase the solubility to the coating solvent described hereinafter (particularly one having an alkyl group moiety), capability of shifting λmax of the dye towards a longer wavelength side (an aryl group, an unsaturated heterocyclic group, an electron attracting group such as a halogenated alkyl group or a cyano group), and easy synthesis.

In the above formula (I), the linear or branched alkyl group, the cyclic alkyl group, the linear or branched alkenyl group, the cyclic alkenyl group, the linear or branched alkoxy group, and the linear or branched alkylthio group for R₁ to R₇, and the alkyl chain moiety of the alkyl group for R₁₆ to R₃₀, may further have a substituent. Such a substituent may, for example, be a C₁₋₁₀ alkoxy group such as a methoxy group, an ethoxy group, a n-propoxy group, an isopropoxy group, a n-butoxy group, a sec-butoxy group or a tert-butoxy group; a C₂₋₁₂ alkoxyalkoxy group such as a methoxymethoxy group, an ethoxymethoxy group, a propoxymethoxy group, an ethoxyethoxy group, a propoxyethoxy group or a methoxybutoxy group; a C₃₋₁₅ alkoxyalkoxyalkoxy group such as a methoxymethoxymethoxy group, a methoxymethoxyethoxy group, a methoxyethoxymethoxy group, a methoxymethoxyethoxy group or an ethoxyethoxymethoxy group; a C₆₋₁₂ aryloxy group such as a phenoxy group, a tolyloxy group, a xylyloxy group or a naphthyloxy group; or a C₂₋₁₂ alkenyloxy group such as an allyloxy group or a vinyloxy group.

Further, other substituents may, for example, be a heterocyclic group such as a 2-thienyl group, a 2-pyridyl group, a 4-piperidyl group or a morpholino group; a cyano group; a nitro group; a hydroxyl group; a mercapto group; an alkylthio group such as a methylmercapto group or an ethylmercapto group; a C₁₋₁₀ alkylamino group such as an N,N-dimethylamino group or an N,N-diethylamino group; a C₁₋₆ alkylsulfonylamino group such as a methylsulfonylamino group, an ethylsulfonylamino group or a n-propylsulfonylamino group; a halogen atom such as a fluorine atom, a chlorine atom or a bromine atom; an alkoxycarbonyl group such as a methoxycarbonyl group, an ethoxycarbonyl group or an isopropoxycarbonyl group; a C₂₋₇ alkylcarbonyl group such as a methylcarbonyl group, an ethylcarbonyl group, a n-propylcarbonyl group, an isopropylcarbonyl group or a n-butylcarbonyl group; a C₂₋₇ alkylcarbonyloxy group such as a methylcarbonyloxy group, an ethylcarbonyloxy group, a n-propylcarbonyloxy group, an isopropylcarbonyloxy group or a n-butylcarbonyloxy group; or a C₂₋₇ alkoxycarbonyloxy group such as a methoxycarbonyloxy group, an ethoxycarbonyloxy group, a n-propoxycarbonyloxy group, an isopropoxycarbonyloxy group or a n-butoxycarbonyloxy group.

In the formula (I), among R₁ to R₇, adjacent substituents may be bonded to each other to form a saturated or unsaturated condensed ring. As the structure of the condensed ring, a saturated hydrocarbon ring having a 5- to 7-membered cyclic structure, is preferred.

Further, in the formula (I), n is from 1 to 4, and each of R_{A} and R_{B} which are independent of each other, is a hydrogen atom, a C₁₋₁₂ linear or branched alkyl group. A in R_{A} is an even number among from 8 to 7+2n, and B in R_{B} is an odd number among from 8 to 7+2n. For example, when n is 1, 7+2n=9. Therefore, A becomes 8, and B becomes 9. Further, with respect to R_{A} and R_{B}, when n=2 to 4, a plurality of R_{A} and R_{B} bonded to different carbon atoms, will be present. Such a plurality of R_{A} and R_{B} may be the same or different from one another.

Specifically, the following condensed rings may be mentioned.

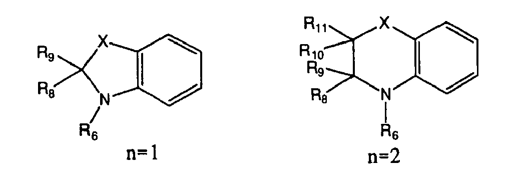

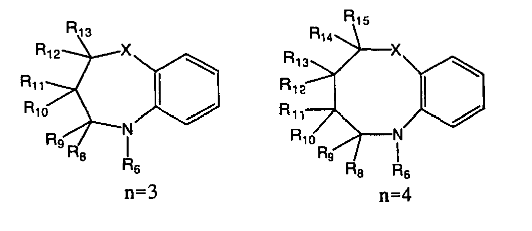

When n=2, 3 or 4, from the carbon close to N (nitrogen atom) at the 7-position, R₈, R₉ to R₁₅ are sequentially numbered. Among them, a preferred cyclic structure is n=2 or 3, and particularly preferred is n=2. In such a case, the synthesis of the compound is easy, and the compound is considered to be chemically stable. Further, each of R₈ to R₁₅ in such a condensed ring, is a hydrogen atom or a C₁₋₁₂ linear or branched alkyl group. Further, each of R₈ to R₁₅ may be a substituent as exemplified as the above-mentioned alkyl group which may be substituted (provided that a polar group which makes the synthesis difficult, such as a hydroxyl group or a cyano group, is excluded).

X is an oxygen atom, a sulfur atom or NR₇ (R₇ is as defined above). Among them, an oxygen atom or NR₇ is preferred from the viewpoint of industrial synthesis. Particularly preferred from the viewpoint of the synthesis, is an oxygen atom. Namely, most preferred as a combination of n and X is such that X is an oxygen atom, and n=2.

A further preferred 7-aminocarbostyril compound to be used for an optical recording medium to which the present practical mode is applied, is as follows. Namely, in the above formula (I), X is an oxygen atom or NR₇. R₁ is a hydrogen atom or a C₁₋₄ linear or branched alkyl group, and each of R₂ and R₃ which are independent of each other, is a hydrogen atom, a C₁₋₈ linear or branched alkyl group, a C₁₋₈ linear or branched alkoxy group, a halogen atom, a C₇₋₁₂ aralkyl group, an unsaturated heterocyclic group or an aryl group which may be substituted. Each of R₄ and R₅ is a hydrogen atom, and each of R₆ and R₇ which are independent of each other is an unsaturated C₁₋₈ linear or branched alkyl group, or a cyclic alkyl group. n is from 1 to 4, and each of R_{A} and R_{B} which are independent of each other, is a hydrogen atom or a C₁₋₁₂ linear or branched alkyl group. A in R_{A} is an even number among from 8 to 7+2n, and B in R_{B} is an odd number among from 8 to 7+2n. In a case where n is from 2 to 4, a plurality of R_{A} or R_{B} may be different from one another. However, among R₁ to R₇, adjacent substituents may be bonded to each other to form a condensed ring. Further, when n=2, such a compound can be used as a chemically stable dye.

The compound of the formula (I) is a compound having a molecular weight of preferably at most 1,000, particularly preferably at most 600, and preferably at least 180, particularly preferably at least 200. Within this range, good recording characteristics can be expected. If the molecular weight is excessively large, the gram absorptivity decreases, such being undesirable.

The following compounds (1) to (66) may be mentioned as preferred examples of the compound of the formula (I).

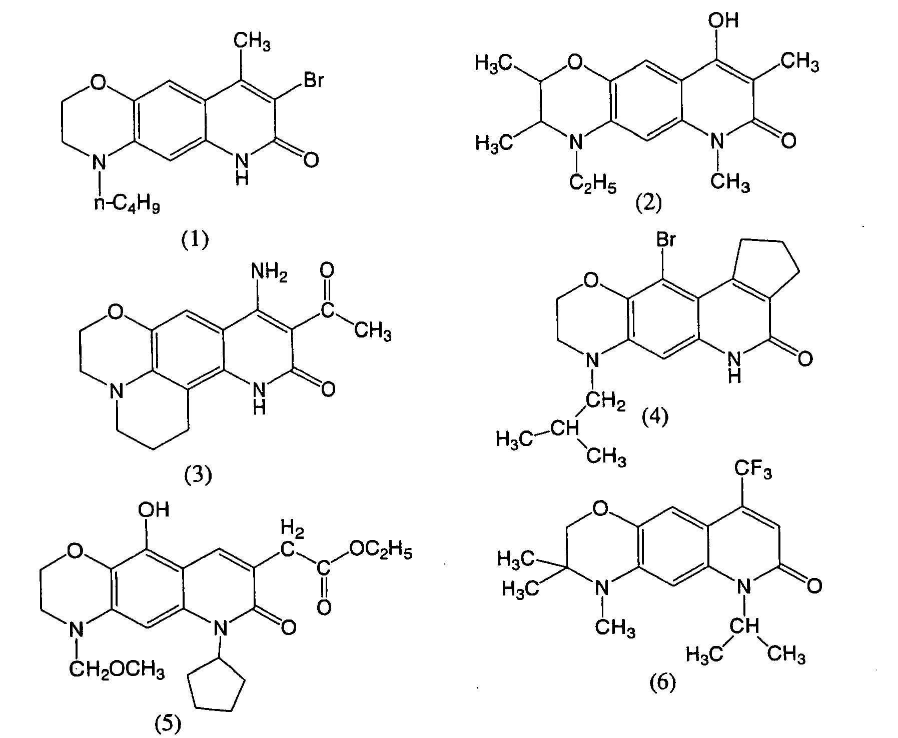

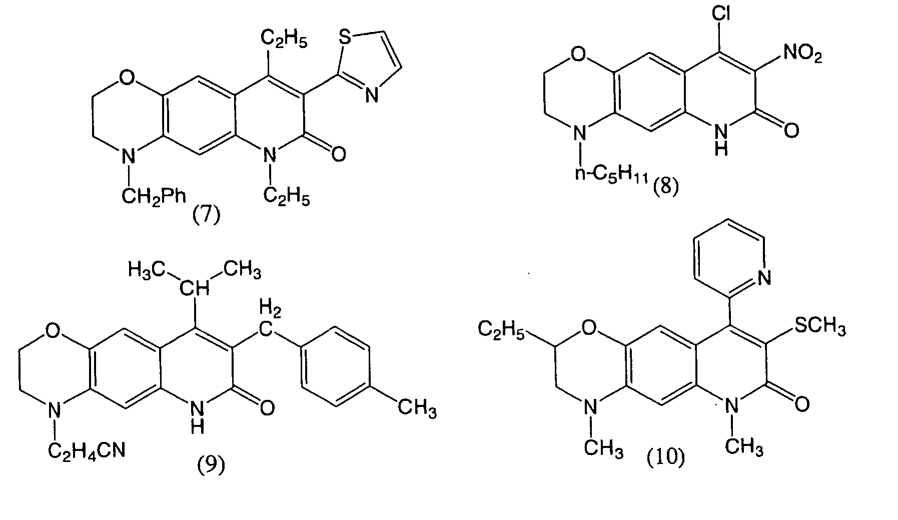

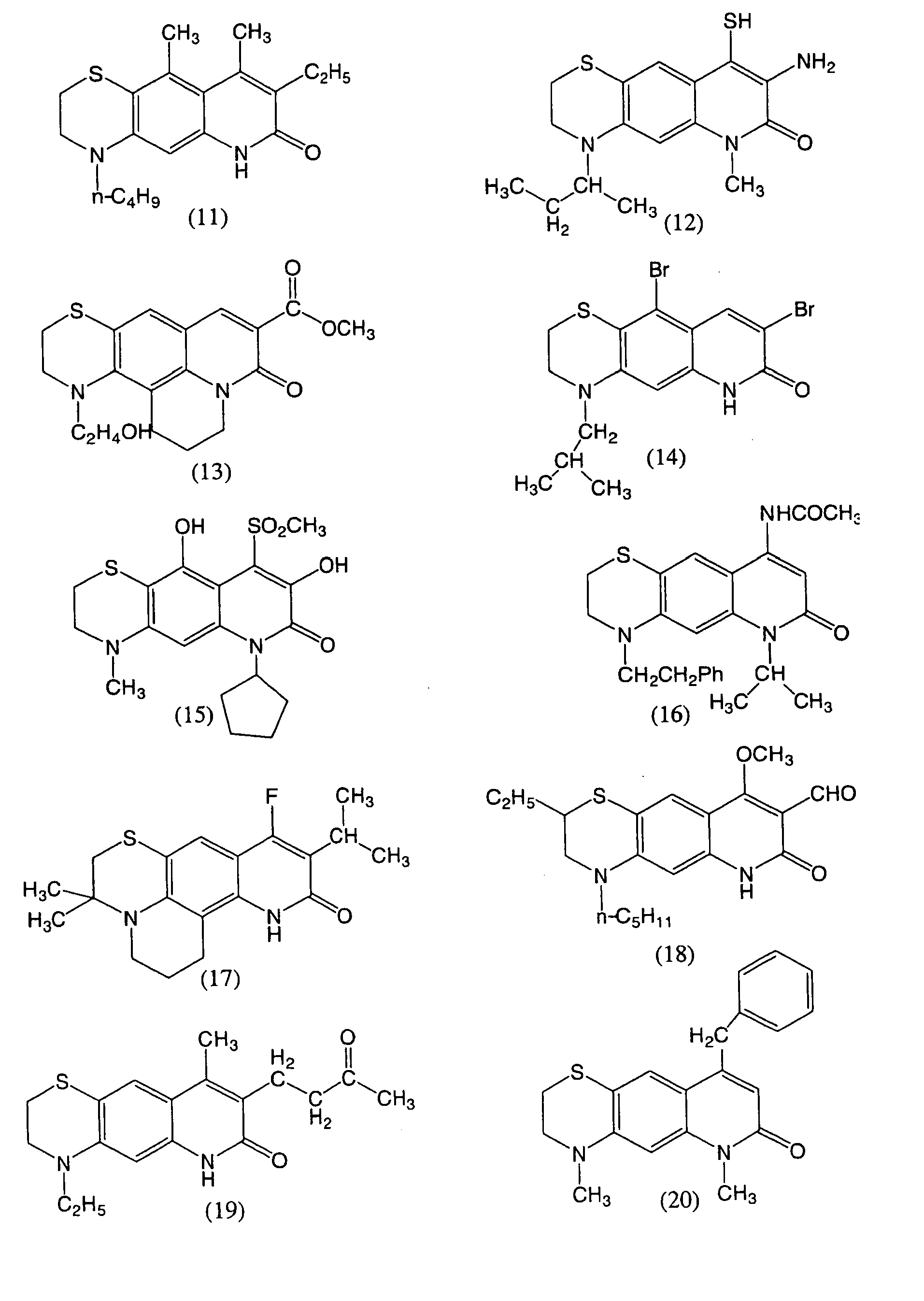

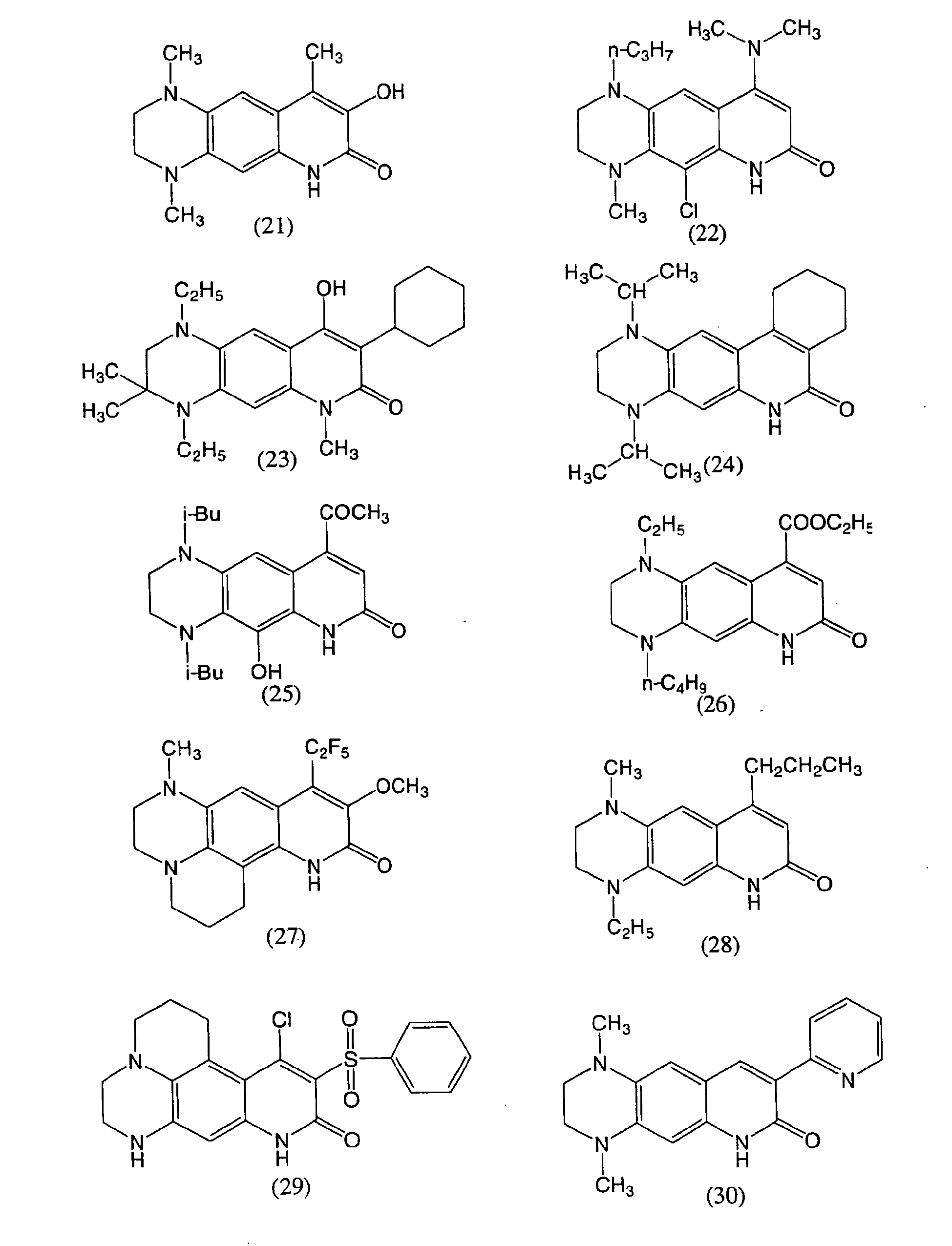

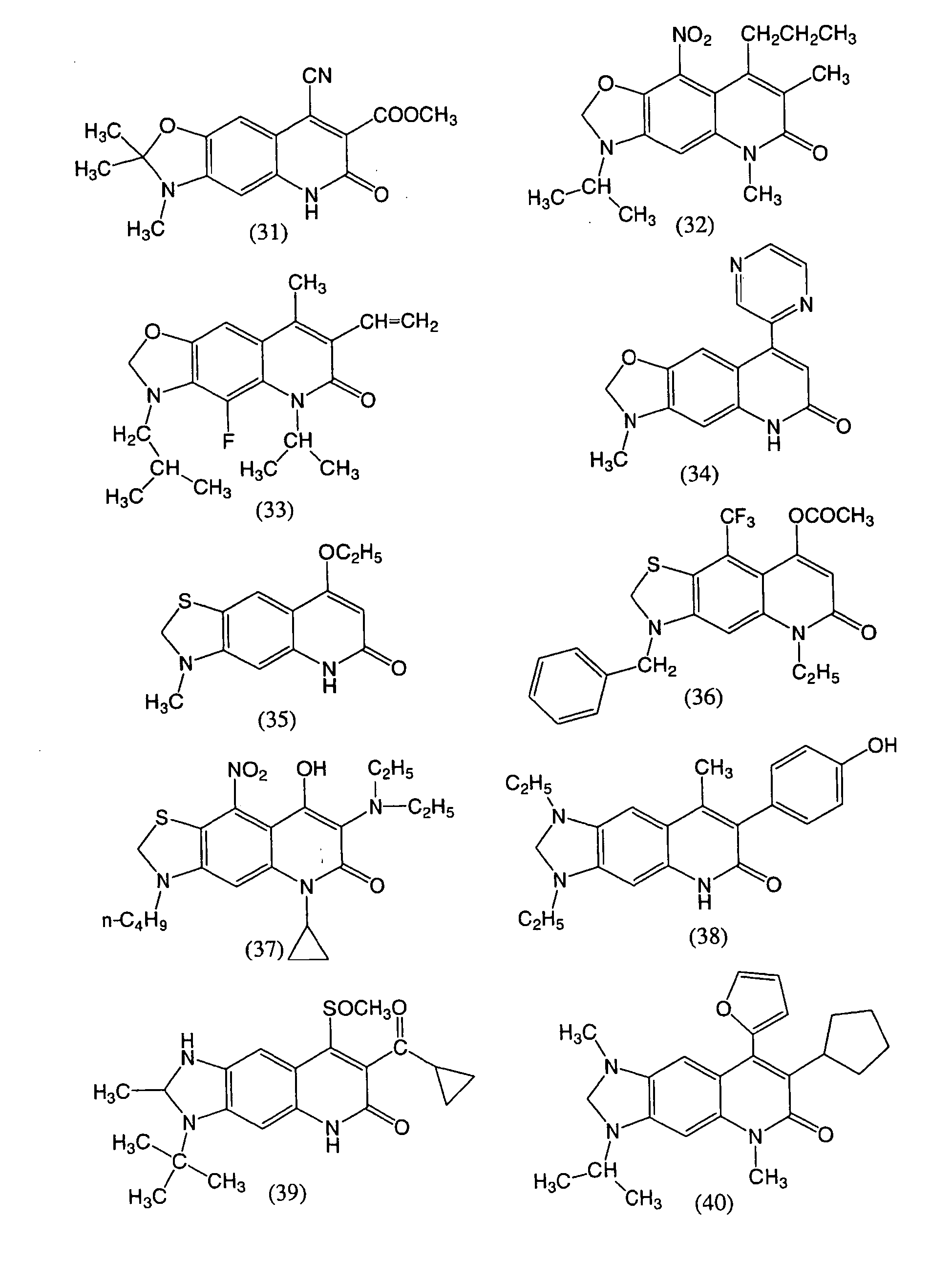

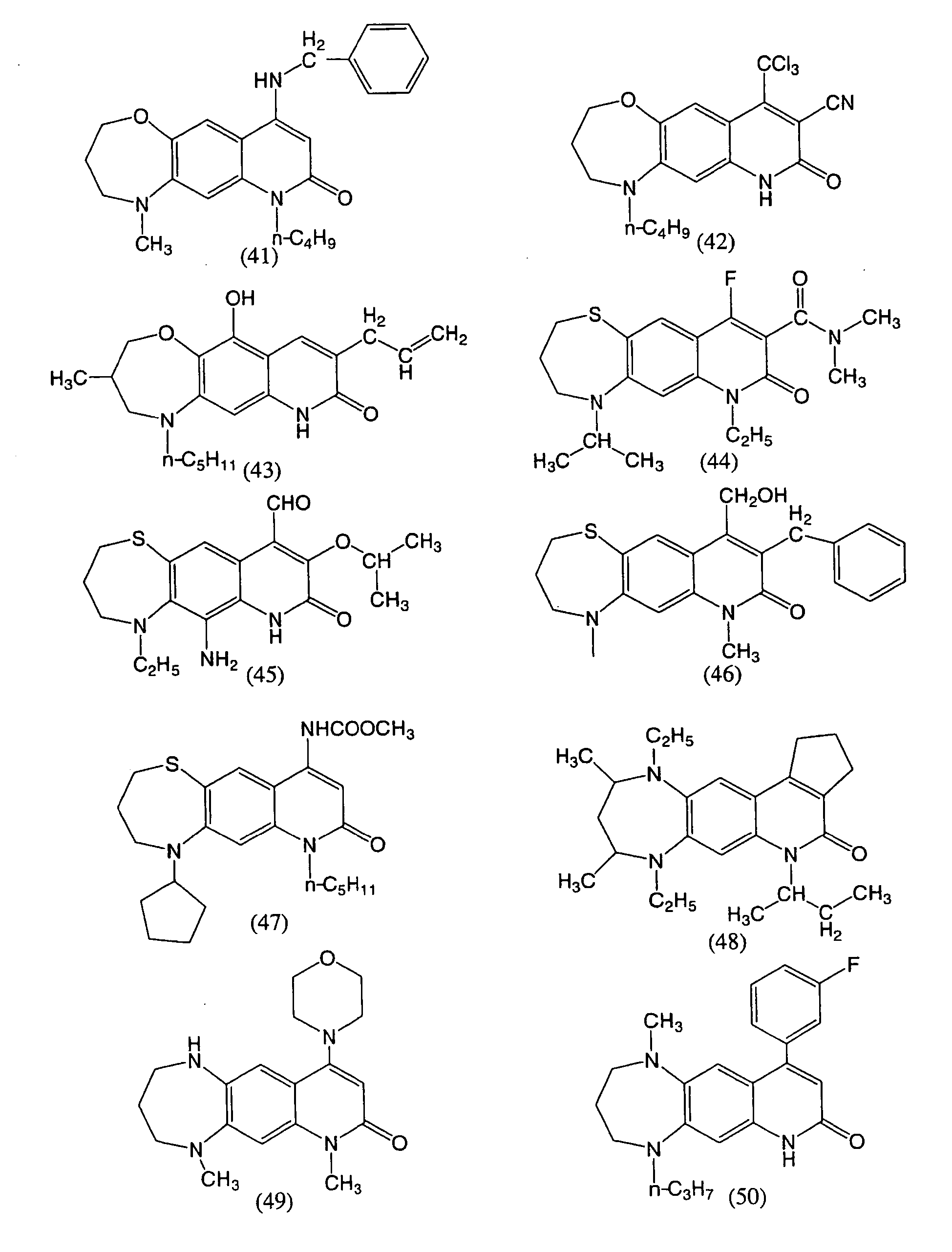

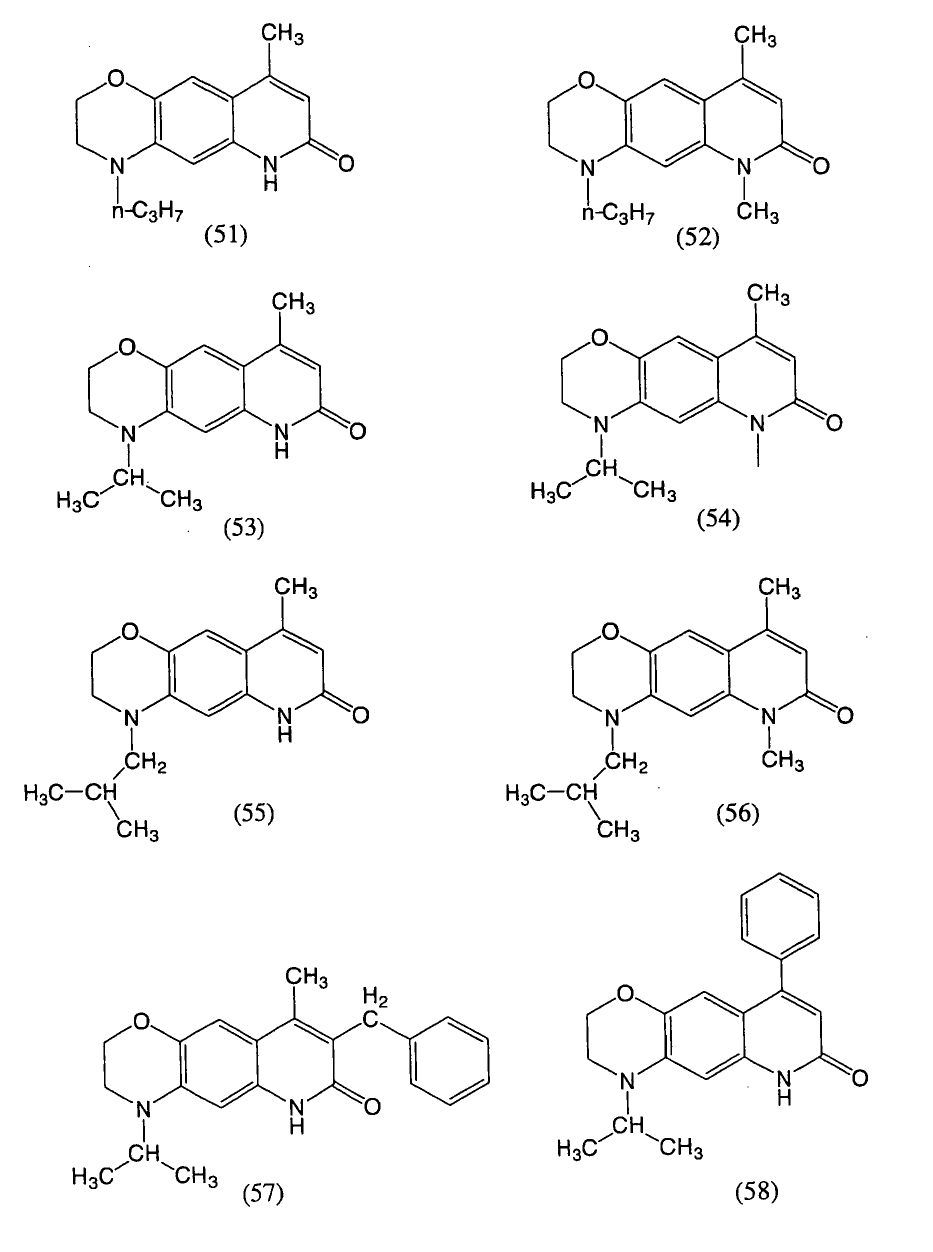

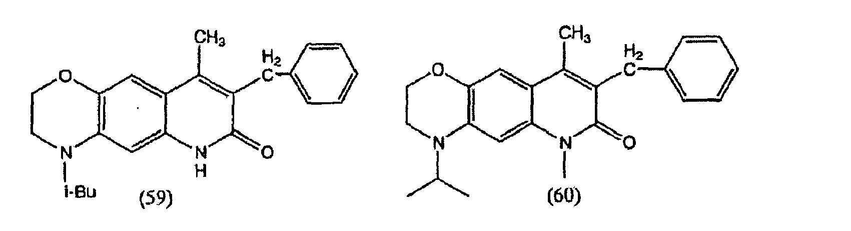

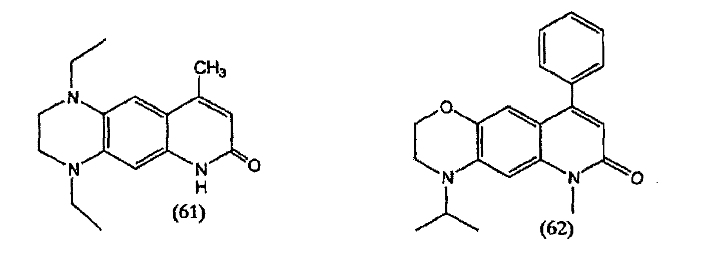

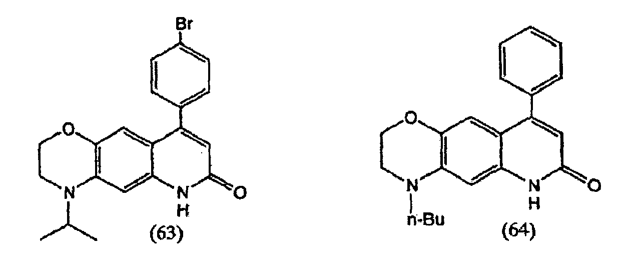

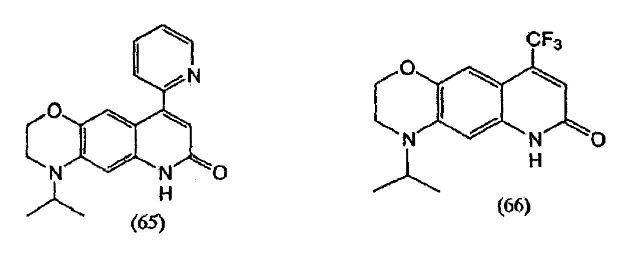

### Preparation Methods

In the present invention, methods for preparing the compounds disclosed in the specification are not particularly limited, and as common methods for preparing a quinoline ring (for convenience sake, n=2, and each of R₇, R₈, R₉ and R₁₀ is represented by a hydrogen atom), the following methods may be mentioned:
(1) A condensation reaction of a m(meta)-phenylenediamine derivative with a β-ketone ester or a diethyl malonate derivative 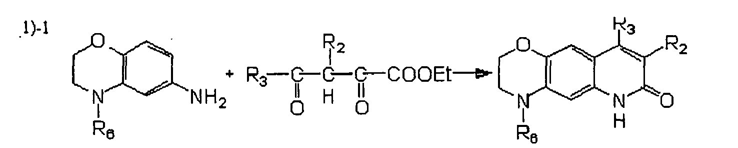
   Like the above reaction, by changing the types of substituents R² and R³ of β-ketoester, various substituents may be introduced. (ref. J.O.C. 56, 3, 980 (1991), etc.) 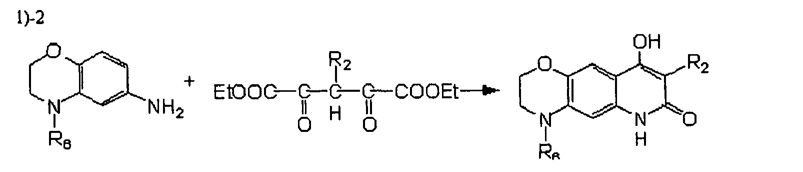
   Further, by using a diethyl malonate derivative, a compound wherein R₃=OH can be prepared.
(2) Preparation from 2-substituted nitrobenzene 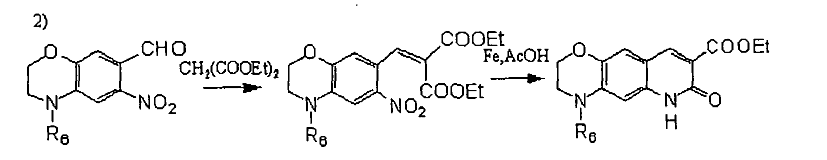 ref. Chem. Pharm. Bull, 48 (12), 2003 (2000)
(3) Vilsmeier reaction of acetanilide 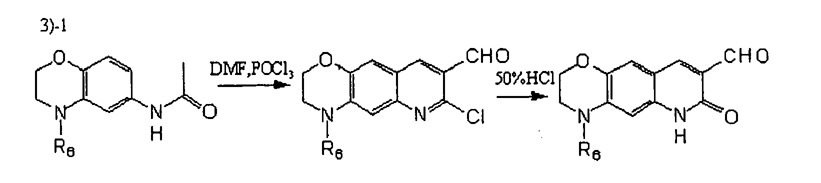 ref. J. Hetero. Chem. 31, 701 (1994) 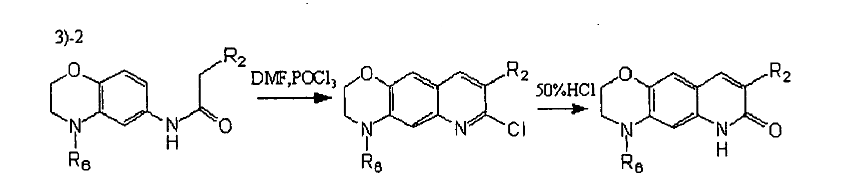 ref. J.C.S. perkin1, 1537 (1981).

On the other hand, as a method for preparing an aromatic ring represented by N-C(RARB)-X, it may be prepared by e.g. a reaction of an o(ortho)-aminophenol derivative with an alkyl halide (Monatsch. Chem. 127, 305-311 (1996), Heterocycles, 38, 1, 5 (1994), other than the method disclosed in Example 1.

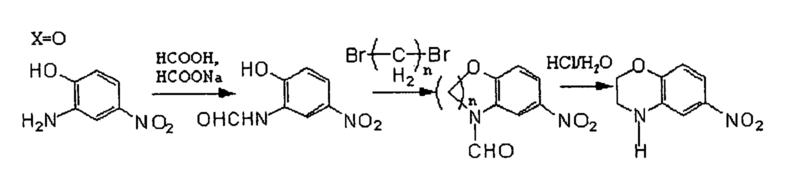

Further, a ring of X=NR₇ may be prepared from 3,4-difluoronitroaniline and ethylene diamine, as disclosed in J. Hetero. Chem. 25, 479 (1988).

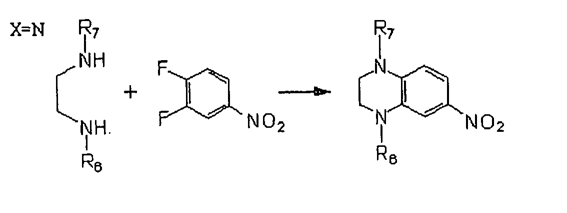

For a ring where X=S, a similar route for synthesis from an aminothiophenol, or a method for synthesis from a benzothiazole as disclosed in J.O.C. 60, 2597 (1995) is, for example, conceivable.

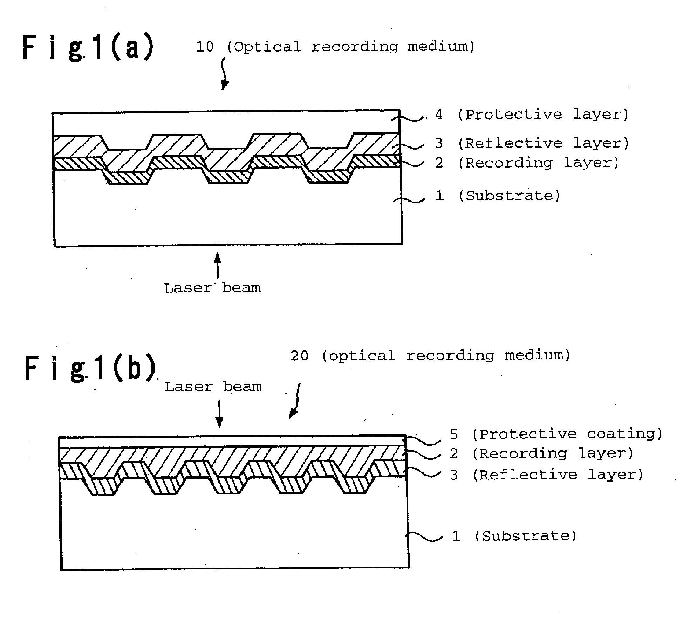

Now, optical recording media to which the present practical mode may be applied, will be described. The optical recording media to which the present practical mode may be applied, comprises at least a substrate and a recording layer containing the compound of the formula (I). Further, an under layer, a reflective layer, a protective layer, etc., may be provided, as the case requires. Figs. 1 illustrate optical recording media to which the present practical mode may be applied. Fig. 1(a) is the first embodiment, and Fig. 1(b) is the second embodiment. The optical recording medium 10 shown in Fig. 1(a) comprises a substrate 1 made of a light transmitting material, a recording layer 2 formed on the substrate 1, and a reflective layer 3 and a protective layer 4 laminated on the recording layer 2 in this order. On the optical recording medium 10, recording/readout of information is carried out by a laser beam irradiated from the substrate 1 side.

For the sake of convenience for description, in the optical recording medium 10, the side where the protective layer 4 is present, will be referred to as an upper side, and the side where the substrate 1 is present, will be referred to as a lower side, and the surfaces of the respective layers corresponding to such directions will be referred to as the upper surface and the lower surface of the respective layers.

For the substrate 1, various materials may be used so long as they are basically materials transparent at the wavelength of the recording light and the readout light. Specifically, a resin such as an acrylic resin, a methacrylic resin, a polycarbonate resin, a polyolefin resin (particularly an amorphous polyolefin), a polyester resin, a polystyrene resin or an epoxy resin, or glass, may, for example, be mentioned. Further, a structure may also be mentioned wherein a resin layer made of a radiation-curable resin such as a photocurable resin, is provided on glass. Among them, a polycarbonate resin to be used by an injection molding method is preferred from the viewpoint of the high productivity, the costs and the moisture absorption resistance, and an amorphous polyolefin is preferred from the viewpoint of the chemical resistance and the moisture absorption resistance. Further, from the viewpoint of e.g. a high speed response, glass is preferred.

In a case where a substrate 1 made of a resin is used, or in a case where a substrate 1 having a resin layer formed on a side to be in contact with the recording layer (upper side), guide grooves or pits for a laser beam for recording/readout may be formed on the upper side surface. The shape of the guide grooves may be a concentric circle shape on the basis of the center of the optical recording medium 10 or a spiral form. In a case where guide grooves in a spiral form are formed, the groove pitch is preferably at a level of from 0.2 to 1.2 µm.

A recording layer 2 containing the compound of the formula (I) is formed directly on the upper side of the substrate 1 or on the upper side of an undercoat layer or the like formed on the substrate 1 as the case requires. As a method for forming the recording layer 2, any common thin film forming method such as a vacuum deposition method, a sputtering method, a doctor blade method, a cast method, a spin coating method or a dipping method may be mentioned. A spin coating method is preferred in view of mass productivity and cost, and a vacuum deposition method is more preferred than a coating method from such a viewpoint that a recording layer 2 having a uniform thickness can be obtained. In the case of film formation by a spin coating method, the number of rotation is preferably from 500 to 15,000 rpm. Further, after spin coating, heating or exposure to vapor of a solvent may be carried out as the case requires.

In a case where a recording layer 2 is formed by a coating method such as a doctor blade method, a cast method, a spin coating method or a dipping method, a coating solvent used to dissolve the compound of the formula (I) for coating on the substrate 1 is not particularly limited so long as it is a solvent which does not erode the substrate 1. Specifically, it may, for example, be a ketone alcohol type solvent such as diacetone alcohol or 3-hydroxy-3-methyl-2-butanone; a cellosolve type solvent such as methyl cellosolve or ethyl cellosolve; a chain hydrocarbon type solvent such as n-hexane or n-octane; a cyclic hydrocarbon type solvent such as cyclohexane, methylcyclohexane, ethylcyclohexane, dimethylcyclohexane, n-butylcyclohexane, tert-butylcyclohexane or cyclooctane; a perfluoroalkyl alcohol type solvent such as tetrafluoropropanol, octafluoropentanol or hexafluorobutanol; or a hydroxycarboxylate type solvent such as methyl lactate, ethyl lactate or methyl 2-hydroxyisobutylate.

In the case of the vacuum deposition method, the compound of the formula (I) and, as the case requires, another dye or a recording layer component such as an additive, are put in a crucible installed in the inside of a vacuum container, the inside of the vacuum container is evacuated to a level of from 10⁻² to 10⁻⁵ Pa by an appropriate vacuum pump, and then the crucible is heated so that the recording layer component is evaporated and deposited on a substrate which is disposed to face the crucible, to form a recording layer 2.

Further, for the purpose of improving stability or light resistance, e.g. a transition metal chelate compound (such as acetylacetonate chelate, bisphenyldithiol, salicylaldehyde oxime or bisdithio-α-diketone) may be incorporated as a singlet oxygen quencher, or for the purpose of improving recording sensitivity, a recording sensitivity improving agent such as a metal type compound may be incorporated into the recording layer 2 in addition to the compound of the above formula (I). Here, the metal type compound may be a compound having a metal such as a transition metal contained therein in a form of an atom, an ion or a cluster, and examples of which include organic metal compounds such as an ethylene diamine type complex, an azomethine type complex, a phenylhydroxyamine type complex, a phenanthroline type complex, a dihydroxyazobenzene type complex, a dioxime type complex, a nitrosoaminophenol type complex, a pyridyltriazine type complex, an acetylacetonate type complex, a metallocene type complex and a porphyrin type complex. The metal atom is not particularly limited, but a transition metal is preferred.

Here, for the recording layer 2, a plural types of the compounds of the formula (I) may be used together as the case requires.

Further, as the case requires, another type of dye may be used together with the compound of the above formula (I) for the recording layer 2. Said another type of dye is not particularly limited so long as it has an appropriate absorption mainly in the oscillation wavelength region of a laser beam for recording.
Further, a dye suitable for recording/readout by using near infrared ray laser having an oscillation wavelength in the wavelength region of from 770 to 830 nm, used for e.g. CD-R, or a dye suitable for recording/readout by using red laser having an oscillation wavelength in the wavelength region of from 620 to 690 nm, used for e.g. DVD-R, may be incorporated in the recording layer 2 together with the compound of the formula (I), thereby to produce an optical recording medium 10 corresponding to recording/readout by using a several types of laser beams in different wavelength regions.

Said another type of dye other than the compound of the formula (I) may, for example, be a metal-containing azo type dye, a benzophenone type dye, a phthalocyanine type dye, a naphthalocyanine type dye, a cyanine type dye, an azo type dye, a squalilium type dye, a metal-containing indoaniline type dye, a triarylmethane type dye, a merocyanine type dye, an azulenium type dye, a naphthoquinone type dye, an anthraquinone type dye, an indophenol type dye, a xanthene type dye, an oxazine type dye or a pyrylium type dye.

Further, as the case requires, a binder, a leveling agent, an anti-foaming agent, etc., may be used together. Preferred as a binder may, for example, be polyvinyl alcohol, polyvinyl pyrrolidone, nitrocellulose, cellulose acetate, a ketone type resin, an acryl type resin, a polystyrene type resin, a urethane type resin, polyvinyl butyral, polycarbonate or polyolefin.

The thickness of the recording layer 2 is not particularly limited since the suitable film thickness varies depending upon e.g. the recording method, however, a certain extent of film thickness is required for recording, and accordingly it is usually at least 1 nm, preferably at least 5 nm. However, recording may not favorably be carried out if the recording layer is too thick, and accordingly it is usually at most 300 nm, preferably at most 200 nm, more preferably at most 100 nm.

On the recording layer 2, a reflective layer 3 is formed. The thickness of the reflective layer 3 is preferably from 50 to 300 nm.

As the material for the reflective layer 3, a material having an adequately high reflectivity at the wavelength of a laser beam for readout, for example, a metal such as Au, A1, Ag, Cu, Ti, Cr, Ni, Pt, Ta or Pd may be used alone or as an alloy. Among them, Au, Al and Ag have a high reflectivity, and are suitable as a material for the reflective layer 3. Further, one comprising such a metal as main component and having another material incorporated may also be mentioned. Here, the main component means a content of at least 50%. Said another material other than the main component may, for example, be a metal or a semimetal such as Mg, Se, Hf, V, Nb, Ru, W, Mn, Re, Fe, Co, Rh, Ir, Cu, Zn, Cd, Ga, In, Si, Ge, Te, Pb, Po, Sn, Bi, Ta, Ti, Pt, Pd or Nd. Particularly preferred is one containing Ag as the main component, in such a viewpoint that the cost is low, a high reflectivity is likely to be obtained, and in a case where a print-receiving layer is formed as mentioned hereinafter, a beautiful one, the base color of which is white, can be obtained. For example, an alloy comprising Ag and at least one member selected from Au, Pd, Pt, Cu and Nd incorporated in an amount at a level of from 0.1 atomic% to 5 atomic% has a high reflectivity, a high durability and a high sensitivity, is produced at a low cost, and is thereby preferred. Specifically, a AgPdCu alloy, a AgCuAu alloy, a AgCuAuNd alloy, or a AgCuNd alloy may, for example, be mentioned. As a material other than a metal, a low refractive index thin film and a high refractive index thin film may alternately be laminated one on the other to form a multilayer film, which is used as a reflective layer 3.

As the method of forming a reflective layer 3, a sputtering method, an ion plating method, a chemical deposition method or a vacuum deposition method may, for example, be mentioned. Further, a known inorganic or organic interlayer or adhesive layer may be formed on the substrate 1 or below the reflective layer 3 with a purpose of increasing the reflectivity, improving recording characteristics or increasing adhesive properties.

A protective layer 4 is formed on the reflective layer 3. The material of the protective layer 4 is not particularly limited so long as the reflective layer 3 is protected from external force. As the material of an organic substance, a thermoplastic resin, a thermosetting resin, an electron radiation curing resin or a UV curing resin may, for example, be mentioned. Further, as an inorganic substance, silicon dioxide, silicon nitride, MgF₂ or SnO₂ may, for example, be mentioned.

In a case where a thermoplastic resin, a thermosetting resin or the like is used, it may be dissolved in a proper solvent, and a coating liquid thus obtained may be coated on the reflective layer 3, followed by drying, whereby a protective layer 4 is formed. In a case where a UV curing resin is used, it is coated as it is on the reflective layer 3, or a coating liquid prepared by dissolving the resin in a proper solvent is coated on the reflective layer 3, followed by irradiation with UV light for curing, whereby a protective layer 4 is formed. As the UV curing resin, an acrylate type resin such as urethane acrylate, epoxy acrylate or polyester acrylate may, for example, be used. These materials may be used alone or as a mixture of several types. Further, the protective layer may be formed as a single layer or as a multilayer.

As a method of forming the protective layer 4, similar to the recording layer 2, a coating method such as a spin coating method or a cast method, a sputtering method or a chemical vapor deposition method may, for example, be used, and among them, a spin coating method is preferred. The thickness of the protective layer 4 is usually at least 0.1 µm, preferably at least 3 µm, since a certain extent of thickness is required to obtain its protective function. However, if it is too thick, not only no higher effect will be obtained but also it may take a long time for formation of the protective layer 4 or the cost tends to be high, and accordingly it is usually at most 100 µm, preferably at most 30 µm.

The layer structure of the optical recording medium 10 has been explained above with reference to the structure comprising a substrate, a recording layer, a reflective layer and a protective layer laminated in this order. However, another layer structure may be employed.

For example, another substrate 1 may further be bonded to the upper side surface of the protective layer 4 in the layer structure of the above example or to the upper side surface of the reflective layer 3 in the layer structure of the above example without a protective layer 4. In this case, the substrate 1 may be a substrate itself without any layer formed thereon, or may have an optional layer such as a reflective layer 3 on the bonding side or on the opposite side. Further, two optical recording media 10 having the layer structure of the above example or optical recording media 10 having a layer structure of the above example without a protective layer 4, may be bonded so that the upper side surfaces of the protective layer 4 and/or the reflective layer 3 of these media face each other.

Now, the second embodiment of the optical recording medium will be described. Fig. 1(b) is a view illustrating the second embodiment of the optical recording medium. Portions common to the optical recording medium 10 in the first embodiment will be identified by the same symbols, and their description will be omitted. The optical recording medium 20 shown in Fig. 1(b) comprises a substrate 1, a reflective layer 3 formed on the substrate 1, and a recording layer 2 and a protective coating 5 sequentially laminated on the reflective layer 3. The optical recording medium 20 is constructed so that recording/readout of information is carried out by a laser beam irradiated from the protective coating 5 side.

As the protective coating 5, a film or a sheet-form product may be bonded by means of an adhesive, or the same material as for the above protective layer 4 may be used, and a coating liquid for film formation is coated, followed by curing or drying to form the protective coating. The thickness of the protective coating 5 is usually at least 0.1 µm, preferably at least 3 µm, since a certain extent of thickness is required to obtain its protective function. However, if it is too thick, not only no higher effect will be obtained, but it takes a long time for formation of the protective layer 5 or the cost tends to be high, and accordingly it is usually at most 300 µm, preferably at most 200 µm.

The respective layers such as the recording layer and the reflective layer, may usually be the same as used in the above optical recording medium 10. However, in the present layer constitution, the substrate 1 is not necessarily transparent, and accordingly, an opaque resin, a ceramic or a metal (including an alloy) may, for example, be employed in addition to the above-described materials. In such a layer constitution also, there may be an optional layer between layers, as the case requires, within a range of not impairing characteristics of the present invention.

Here, as one means to increase the recording density of the optical recording medium 10 or 20, increase in the numerical aperture of an object lens may be mentioned, whereby the beam spot condensed on the surface on which information is to be recorded can be micrified. However, if the numerical aperture of an object lens is increased, when the optical recording medium is irradiated with a laser beam for recording/readout, the aberration of the beam spot due to e.g. mechanical characteristics of the optical recording medium 10 or 20 tends to be significant, whereby no favorable signals for recording/readout may be obtained stably in some cases.

Such an aberration tends to be significant when the transparent substrate or the protective coating through which a laser beam is transmitted is thick, and it is preferred to make the substrate or the protective coating as thin as possible, in order to decrease the aberration. However, a certain extent of thickness is required for the substrate 1 so as to secure the strength of the optical recording medium 10 or 20 in general, and in this case, it is preferred to employ the structure of the optical recording medium 20 (the optical recording medium 20 having a basic layer constitution comprising a substrate 1, a reflective layer 3, a recording layer 2 and a protective coating 5). The protective coating 5 of the optical recording medium 20 is easily made thin as compared with the substrate 1 in the optical recording medium 10, and thus the optical recording medium 20 is preferably employed.

However, even with the structure of the optical recording medium 10 (the optical recording medium 10 having a basic layer constitution comprising a transparent substrate 1, a recording layer 2, a reflective layer 3 and a protective layer 4), by decreasing the thickness of the transparent substrate 1 through which laser beams for recording/readout pass, to a level of from 50 to 300 µm, the aberration can be decreased so that the optical recording medium 10 can be used.

Further, after formation of each of the other layers, an ultraviolet-curing resin layer or an inorganic type thin film may, for example, be formed on the plane of incidence of a laser beam for recording/readout (usually on the lower side surface of the substrate 1), with a purpose of protecting the surface or preventing attachment of dust, etc., and a print-receiving layer on which writing or printing can be carried out by using an inkjet, thermal transfer or other printer or by a writing material, on the side opposite to the plane of incidence of a laser beam for recording/readout (usually on the upper side surface of the reflective layer 3 or the protective layer 4 in general).

The laser beam used for recording/readout of information for the optical recording medium 10 or 20 of the present invention preferably has a wavelength as short as possible from such a viewpoint to realize a high density recording, and particularly preferred is a laser beam having a wavelength of from 350 to 530 nm. As representative examples of such a laser beam, laser beams having center wavelengths of 405 nm, 410 nm and 515 nm may be mentioned.

A laser beam having a wavelength of from 350 to 530 nm can be obtained by using a high output semiconductor laser of blue color with a wavelength of 405 nm or 410 nm or blue green color with a wavelength of 515 nm. In addition, it may be obtained, for example, by wavelength conversion of an oscillation laser beam of either (a) semiconductor laser capable of continuous oscillation having a basic oscillation wavelength of from 740 to 960 nm, or (b) solid laser capable of continuous oscillation with a basic oscillation wavelength of from 740 to 960 nm, to be excited by semiconductor laser, by a second harmonic generation element (SHG).

The above SHG may be any one so long as it is a piezo element which lacks inversion symmetry, and preferred is KDP, ADP, BNN, KN, LBO, a compound semiconductor, etc. Specific examples of the second harmonic include, in a case of semiconductor laser having a basic oscillation wavelength of 860 nm, 430 nm as a double harmonic to the basic oscillation wavelength, and in a case of solid laser excited by semiconductor laser, 430 nm as a double harmonic from a LiSrAlF₆ crystal doped with Cr (basic oscillation wavelength: 860 nm).

In a case where information is recorded on the optical recording medium 10 or 20 of the present invention, the recording layer 2 is usually irradiated with a laser beam focused to a level of from 0.4 to 0.6 µm (usually through the substrate 1 from the substrate 1 side). The region of the recording layer 2 irradiated with the laser beam undergoes thermal deformation such as decomposition, heat generation or melting by absorbing the energy of the laser beam, whereby its optical characteristics change.

To conduct readout of the information recorded on the recording layer 2, the recording layer 2 is irradiated with a laser beam having a lower energy (usually from the same direction as recording). Readout of information on the recording layer 2 is conducted by reading a difference between the reflectivity at a region where a change of the optical characteristics takes place (i.e. the region on which information is recorded) and the reflectivity at a region where no change takes place.

### EXAMPLES

Now, the present invention will be explained in further detail with reference to Examples. However, the present invention is by no means restricted to such Examples unless it exceeds its gist.

### EXAMPLE 1

Among compounds of the formula (I), the above illustrated compound (51) was prepared as follows.

### (a) Preparation Example

30.23 g (0.2 mol) of 2-hydroxyacetanilide of the following formula (1) was suspended in a solvent comprising 200 ml of tetrahydrofuran and 250 ml of toluene, and a reactor was cooled in an ice bath with stirring and maintained to be from 0 to 10°C. 32 g (0.8 mol) of sodium hydroxide and 6 g (0.019 mol) of tetrabutylammonium bromide were added thereto, and 150.4 g (0.8 mol) of 1,2-dibromoethane shown in the above (2) was dropwise added. Thereafter, the reaction solution was stirred for one hour in an ice bath, then returned to room temperature and stirred for 28 hours.

The reaction solution was poured into 600 ml of water, and 200 ml of toluene was added for extraction into an organic layer. Thereafter, 150 ml of toluene was again added to the extracted aqueous layer for recovery, and the mixed toluene layer was washed twice with 400 ml of water, and sodium sulfate was added to the toluene layer, and the mixture was left to stand overnight.

The toluene solution was filtered, and then the solvent was distilled off by an evaporator to obtain 28.17 g (yield: 79.5%) of the following compound (3).

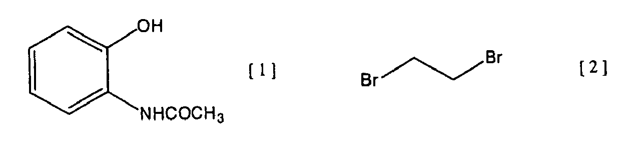

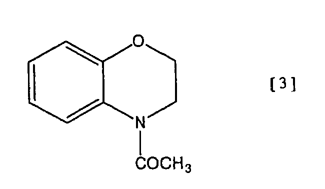

Then, to a solvent mixture comprising 120 ml of methanol and 60 ml of water, 32 g of sodium hydroxide was added and dissolved, and a solution of 28 g of the obtained compound (3) in 50 ml of methanol, was dropwise added thereto. After completion of the dropwise addition, the reaction solution was refluxed for 4 hours.

The reaction solution was poured into 200 ml of water, and 300 ml of toluene was added for extraction. Then, to the aqueous layer, 110 ml of toluene was added for recovery, and the mixed toluene solution was washed twice with 300 ml of water. Then, sodium sulfate was added thereto, and the mixture was left to stand overnight.

The toluene solution was filtered, and then, the solvent was distilled off by an evaporator to obtain 17.36 g (yield: 80.2%) of the following compound (4).

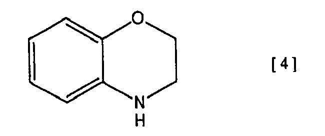

7.4 g (0.055 mol) of the obtained compound (4) was dissolved in 65 ml of N-methyl-2-pyrrolidone, and 11.16 g (0.066 mol) of n-propyl iodide and 4.55 g (0.033 mol) of potassium carbonate were added, followed by heating at from 80 to 90°C for 8 hours. The reaction solution was cooled, then poured into 150 ml of water and extracted with 200 ml of toluene. The extracted toluene layer was washed three times with 100 ml of water, then sodium sulfate was added, and the mixture was left to stand overnight.

The toluene solution was filtered, and then, the solvent was distilled off by an evaporator to obtain 9 g (yield: 92.7%) of the following compound (5).

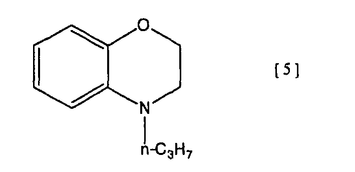

9 g (0.051 mol) of the obtained compound was dropwise added to 30 ml of sulfuric acid maintained at not more than 10°C in an ice bath. In an another vessel, 12.7 g of sulfuric acid was maintained at not higher than 10°C in an ice bath, and 5.17 g (0.051 mol) of 60% nitric acid was dropwise added thereto to form a mixed acid. This mixed acid solution was dropwise added to the sulfuric acid solution of the compound (5) while maintaining the temperature at not more than 10°C, followed by stirring for one hour. After the reaction, the reaction solution was poured into 150 ml of ice water and neutralized with aqueous ammonia. After the neutralization, 100 ml of toluene was added thereto for extraction, and the aqueous layer was again extracted with 100 ml of toluene. The mixed extracted layer was washed three times with 100 ml of water, then sodium sulfate was added, and the mixture was left to stand. After filtration, the solvent was distilled off by an evaporator, and purification was carried out by silica gel column (developing solvent: hexane/ethyl acetate) to obtain 8.33 g (yield: 73.8%) of the following compound (6).

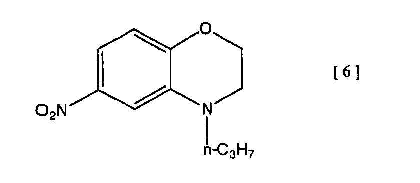

12.58 g (0.22 mol) of iron powder was suspended in 12 ml of water and 1.6 ml of acetic acid, and then heated to 80°C. A solution of 8.33 g (0.037 mol) of the above compound (6) in 20 ml of IPA, was dropwise added thereto, while maintaining the temperature at from 70 to 80°C, followed by heating at 90°C for one hour. After completion of the reaction, the reaction solution was cooled, and neutralized by an addition of potassium carbonate. The reaction solution was filtered to remove the iron powder. To the filtrate, 50 ml of water was added, followed by extraction with ethyl acetate (100 ml x 3). Then, sodium sulfate was added, and the mixture was left to stand. After filtration, the solvent was distilled off by an evaporator to obtain 6.29 g (crude yield: 88%) of the following compound (7).

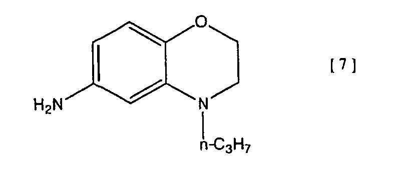

5.03 g (0.026 mol) of the obtained compound (7) and 3.41 g (0.026 mol) of ethyl acetoacetate were heated at 150°C for 8 hours with stirring. The reaction product was cooled, and then, ethyl acetate was added, followed by stirring and filtration. The obtained solid was suspended in ethyl acetate, stirred and subjected to filtration. The obtained solid was dried in vacuum to obtain 4 g (yield: 59.2%) of the compound represented by the illustrated compound (51) (the attached numbers are indicated, based on the nomenclature rule).

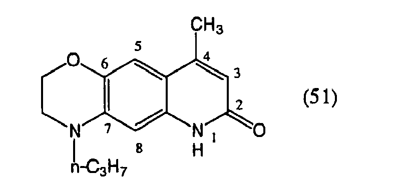

This illustrated compound (51) had a λmax in chloroform of 379.5 nm and a molar absorptivity of 2.5×10⁴. the mass spectrum (EI) of this compound was measured, whereby m/z=258 (M+) was observed, which agrees to the desired compound.

Further, 1H-NMR (DMSO (δ=ppm) 270 MHz) was measured, whereby 0.9 (3H, t, >N-CH₂CH₂CH₃), 1.6 (2H, m, >N-CH₂CH₂CH₃), 2.2 (3H, s, Me-4), 3.2 (2H, t, Ph-N-CH₂CH₂O), 3.4 (2H, t, Ph-O-CH₂), 4.1 (2H, t, >N-CH₂CH₂CH₃), 6.0 (1H, s, H-3), 6.5 (1H, s, H-8), 6.9 (1H, s, H-5), 11.0 (1H, s, NH-1) i.e. peaks which agree to the desired compound.

In 40 ml of DMF, 3.4 g (0.013 mol) of this illustrated compound (51) and 7.39 g (0.13 mol) of potassium hydroxide were added, followed by stirring at room temperature for one hour. Thereafter, 9.34 g (0.065 mol) of methyl iodide was dropwise added, followed by stirring at room temperature for 3 hours.

To the reaction solution, 150 ml of water and 150 ml of ethyl acetate were added, followed by stirring and extraction. The aqueous layer was again extracted with ethyl acetate, and the mixed organic layer was washed twice with 50 ml of water, and sodium sulfate was added, and the mixture was left to stand. After filtration, the solvent was distilled off by an evaporator, and the obtained solid was suspended in hexane, followed by stirring and filtration. The solid obtained by filtration was dried in vacuum to obtain 2.98 g (yield: 82.6%) of the following illustrated compound (52). This illustrated compound (52) had a λmax in chloroform of 380.5 nm and a molar absorptivity of 2.6×10⁴.

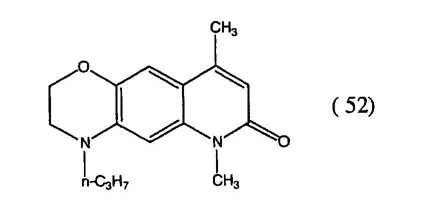

### (b) Evaluation of optical recording medium

The above illustrated compound (52) was dissolved in octafluoropentanol and adjusted to 1 wt%. This solution was filtered, the obtained solution was dropped on an injection molded polycarbonate resin substrate having a diameter of 120 mm and a thickness of 1.2 mm, coated by a spinner method (500 rpm) and then dried at 100°C for 30 minutes. This coated film had a maximum absorption wavelength (λmax) of 384 nm.

Further, on the coated film thus formed, a reflective layer may be formed by film formation of e.g. Ag by a sputtering method, as the case requires, and further, an ultraviolet-curable resin may be applied by e.g. spin coating and cured by UV irradiation to form a protective layer, thereby to obtain an optical recording medium. Such an optical recording medium is capable of recording/readout by e.g. a semiconductor laser beam with a center wavelength of 405 nm by the value of λmax of the coated film. Namely, it is evident that a carbostyril compound having a heteroatom at the 6-position and condensed with an amino group at the 7-position, is a compound having an effective structure for recording by a blue laser beam.

### EXAMPLE 2

Among compounds of the formula (I), the above illustrated compound (53) was prepared as follows.

### (a) Preparation Example

In the same manner as in Example 1, the illustrated compound (53) was obtained. This illustrated compound (53) had a λmax in chloroform of 380.5 nm and a molar absorptivity of 2.4×10⁴.

### (b) Evaluation of optical recording medium

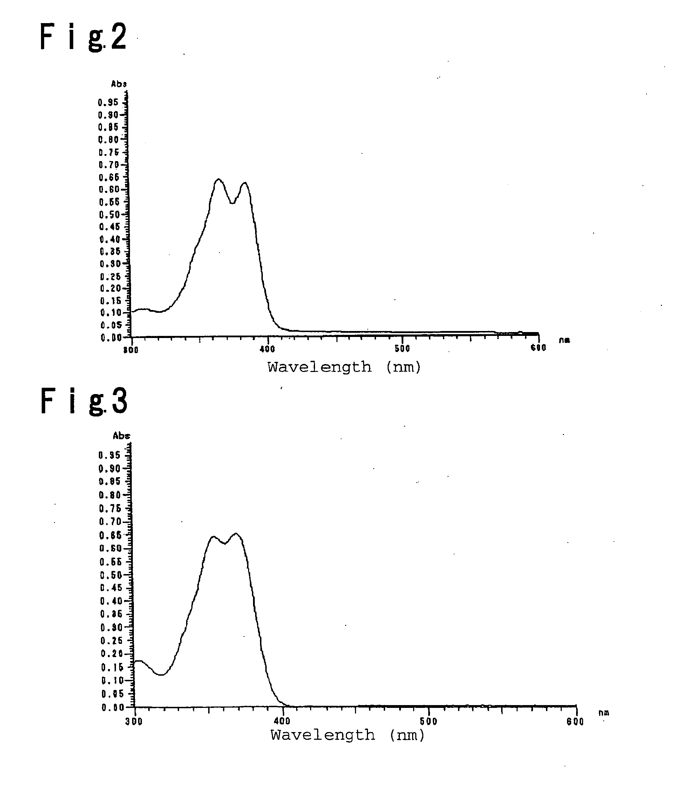

The illustrated compound (53) was dissolved in octafluoropentanol and adjusted to 1 wt%. This solution was filtered, and the obtained solution was dropped on an injection molded polycarbonate resin substrate having a diameter of 120 mm and a thickness of 1.2 mm, coated by a spinner method and then dried at 100°C for 30 minutes. This coated film had a maximum absorption wavelength (λmax) of 385 nm. The results are shown in Fig. 2.

Further, the optical recording medium was prepared as follows.

The above illustrated compound (53) was dissolved in octafluoropentanol and adjusted to 0.9 wt%. This solution was filtered, and the obtained solution was dropped on an injection molded polycarbonate resin substrate having a diameter of 120 mm and a thickness of 0.6 mm and having grooves with a track pitch of 425 nm, a groove width of 163 nm and a groove depth of 90 nm, and coated by a spinner method. Here, the coating was carried out by increasing the rotational speed from 600 rpm to 4,900 rpm over a period of 25 seconds and maintaining it at 4,900 rpm for 5 seconds. Further, it was dried at 100°C for 30 minutes to form a recording layer. Then, a reflective layer was formed by sputtering to form a film of a silver alloy in a thickness of 100 nm. Then, a protective coating agent made of an UV-curable resin was applied by a spinner method and irradiated with an UV beam to form a protective layer having a thickness of 5 µm. Further, by using a slow curable type adhesive, a polycarbonate substrate having a thickness of 0.6 mm was bonded to the side of the protective layer, to obtain an optical recording medium for evaluation.

### (c) Recording Example

While rotating the above-described optical recording medium for evaluation at a linear velocity of 5.7 m/sec, tone-pattern signals of 8T mark/8T space were recorded on the grooves with a laser beam having a wavelength of 405 nm (numerical aperture NA of an object lens=0.65). Here, T is a reference clock period corresponding to a frequency of 66 MHz. As a recording pulse strategy, the number of divided pulses was (n-1) where the mark length was nT, the front recording pulse width was 2T, the subsequent recording pulse width was 0.6T, the bias power was 0.2 mW, the readout power was 0.2 mW, and the recording power was variable. As a result, signals with a modulation amplitude of 28.3% were recorded with 12 mW. The degree of modulation is considered to be further increased by optimizing the recording conditions such as the pulse strategy.

### EXAMPLES 3 to 15

In the similar manner as in the above preparation method, the illustrated compounds (54) to (66) were prepared, and coating films were formed in the similar manner as in Example 1, and the absorption spectra of the coating films were measured. The maximum absorption wavelength in a solution and the molar absorptivity of each of these compounds, and the maximum absorption wavelength of each of the coating films, were measured, and the results are shown in Table 1.

Further, on the coating film thus formed, a reflective layer may be formed by sputtering to form a film of e.g. Ag, as the case requires, and further, an ultraviolet-curable resin may be applied by e.g. spin coating, and cured by UV irradiation to form a protective layer, thereby to obtain an optical recording medium. Such an optical recording medium is capable of recording/readout, for example, by a semiconductor laser beam with a center wavelength of 405 nm by the value of λmax of the coating film. Namely, it is evident that a carbostyril compound having a heteroatom at the 6-position and condensed with an amino group at the 7-position, is a compound having an effective structure for recording by a blue laser beam.

**TABLE 1**

| Illustrated compound No. | Maximum absorption wavelength in solution (solvent) | Molar absorptivity (x 10,000) | Coating solvent | Maximum absorption wavelength of coating film |
|---|---|---|---|---|
| (51) | 379.5 nm (chloroform) | 2.5 | Octafluoropentanol | 363, 384.5 nm |
| (52) | 380.5 nm (chloroform) | 2.6 | Octafluoropentanol | 384 nm |
| (53) | 380.5 nm (chloroform) | 2.4 | Octafluoropentanol | 385 nm |
| (54) | 382 nm (chloroform) | 2.4 | Octafluoropentanol | 385 nm |
| (55) | 380.5 nm (chloroform) | 2.3 | Octafluoropentanol | 385, 362.5 nm |
| (56) | 381.5 nm (chloroform) | 2.4 | Octafluoropentanol | 384.5 nm |
| (57) | 383 nm (chloroform) | 2.5 | Octafluoropentanol | 386.5 nm |
| (58) | 384.5 nm (chloroform) | 2.4 | Octafluoropentanol | 389.5 nm |
| (59) | 383 nm (chloroform) | 2 | Octafluoropentanol | 386 nm |
| (60) | 384 nm (chloroform) | 2.5 | Octafluoropentanol | 386 nm |
| (61) | 393 nm (chloroform) | 1.0 | Octafluoropentanol | 397 nm |
| (62) | 386.5 nm (chloroform) | 2.1 | Octafluoropentanol | 393 nm |
| (63) | 387.5 nm (chloroform) | 1.8 | Octafluoropentanol | 391.5 nm |
| (64) | 385.5 nm (chloroform) | 2.2 | Octafluoropentanol | 371.5, 389.5 (s) nm |
| (65) | 389.5 nm (chloroform) | 1.5 | Octafluoropentanol | 395.5 nm |
| (66) | 403 nm (chloroform) | 1.9 | octafluoropentanol | 385.5 nm |

### COMPARATIVE EXAMPLE 1

For comparison, the following compound (8) was prepared, and evaluation as an optical recording medium was carried out.

### (a) Preparation Example

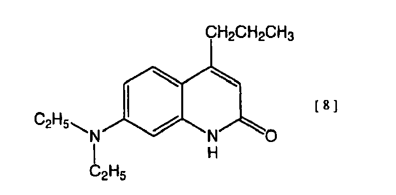

The above compound (8) prepared in the similar manner from m-N,N-diethylaniline, had a λmax in chloroform of 368 nm and a molar absorptivity of 2.5×10⁴.

### (b) Example for optical recording medium

This compound (8) was dissolved in octafluoropentanol and adjusted to 1 wt%. This solution was filtered, and the obtained solution was dropped on an injection molded polycarbonate resin substrate having a diameter of 120 mm and a thickness of 0.6 mm, coated by a spinner method (500 rpm) and then dried at 100°C for 30 minutes. This coated film had a maximum absorption wavelength (λmax) of 370.5 nm, and a good spectrum of the coating film was obtained. However, there was no absorption at a wavelength of 405 nm, and it is evident that recording can not be expected by a laser beam with a center wavelength of 405 nm. The spectrum was shown in Fig. 3. Namely, it is evident that even a carbostyril compound having an amino group at the 7-position is a dye compound inadequate for recording by a blue laser beam, if it does not have a hetero atom at the 6-position.

### COMPARATIVE EXAMPLE 2

For comparison, the following compound (9) was prepared, and evaluation as an optical recording medium was carried out.

### (a) Preparation Example

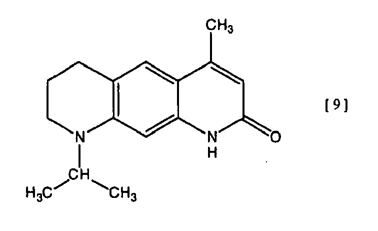

The above compound (9) obtained in the similar manner by using 1,2,3,4-tetrahydroquinoline (product manufactured by Tokyo Kaseihin Co., Ltd.) as the starting material, had a λmax in chloroform of 376 nm and a molar absorptivity of 2.7×10⁴.

### (b) Example for optical recording medium

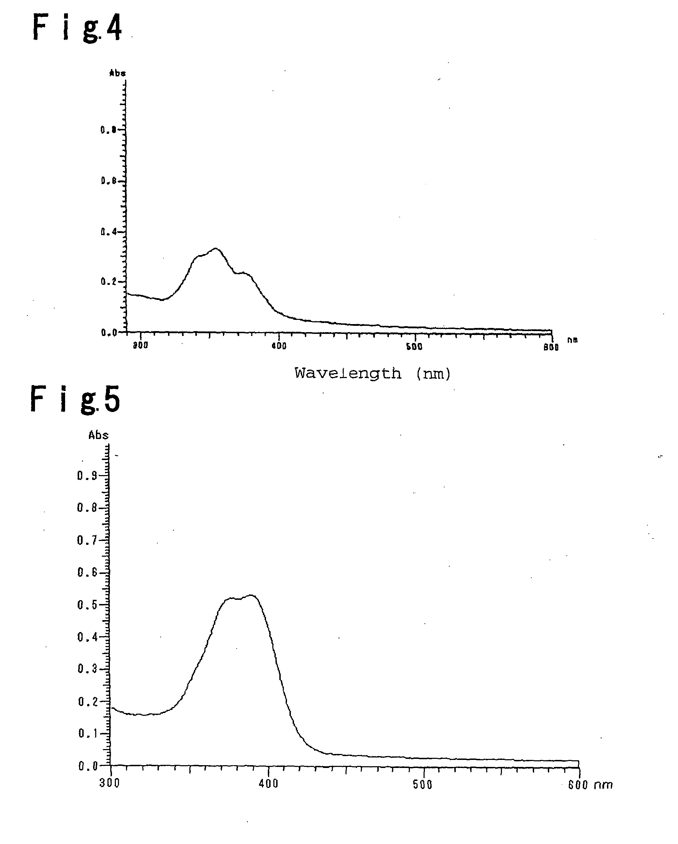

The compound (9) was dissolved in octafluoropentanol and adjusted to 1 wt%. This solution was filtered, and the obtained solution was dropped on an injection molded polycarbonate resin substrate having a diameter of 120 mm and a thickness of 0.6 mm, coated by a spinner method (500 rpm) and then dried at 100°C for 30 minutes. This coating film had a maximum absorption wavelength (λmax) of 354 nm, and a spectrum with a low refractive index and a low reflectance was obtained, and the disk surface was slightly turbid, thus indicating crystallization. The spectrum was shown in Fig. 4.

Namely, it is evident that even the carbostyril compound having an amino group at the 7-position is a dye compound inadequate for recording by a blue laser beam if it does not have a hetero atom at the 6-position.

### EXAMPLE 16

### (a) Preparation Example

In the similar manner as in Example 1, the illustrated compound (58) was obtained. This illustrated compound (58) had a λmax in chloroform of 384.5 nm and a molar absorptivity of 2.4×10⁴.

### (b) Evaluation of optical recording medium

The illustrated compound (58) was dissolved in octafluoropentanol and adjusted to 1 wt%. This solution was filtered, and the obtained solution was dropped on an injection molded polycarbonate resin substrate having a diameter of 120 mm and a thickness of 1.2 mm, coated by a spinner method and then dried at 100°C for 30 minutes. This coating film had a maximum absorption wavelength (λmax) of 389.5 nm. The results are shown in Fig. 5.

Further, the optical recording medium was prepared as follows.

The above illustrated compound (58) was dissolved in octafluoropentanol and adjusted to 0.6 wt%. This solution was filtered, and the obtained solution was dropped on an injection molded polycarbonate resin substrate having a diameter of 120 mm and a thickness of 0.6 mm, having grooves with a track pitch of 425 nm, a groove width of 200 nm and a groove depth of 70 nm, and having ZnS/SiO₂ sputtered thereto, and coated by a spinner method. Here, the coating was carried out by increasing the rotational speed from 600 rpm to 4,900 rpm over a period of 25 seconds and maintaining it at 4,900 rpm for 5 seconds. Further, it was dried at 100°C for 30 minutes to form a recording layer. Then, a reflective layer was formed by sputtering to form a film of a silver alloy in a thickness of 100 nm. Then, a protective coating agent made of an UV-curable resin was applied by a spinner method and irradiated with an UV beam to form a protective layer having a thickness of 5 µm. Further, by using a slow curable type adhesive, a polycarbonate substrate having a thickness of 0.6 mm was bonded to the side of the protective layer, to obtain an optical recording medium for evaluation.

### (c) Recording Example

While rotating the above-described optical recording medium for evaluation at a linear velocity of 5.7 m/sec, tone-pattern signals of 11T mark/11T space were recorded on the grooves with a laser beam having a wavelength of 405 nm (numerical aperture NA of an object lens=0.65). Here, T is a reference clock period corresponding to a frequency of 66 MHz. As a recording pulse strategy, the number of divided pulses was (n-1) where the mark length was nT, the front recording pulse width was 2T, the subsequent recording pulse width was 0.6T, the bias power was 0.2 mW, the readout power was 0.2 mW, and the recording power was variable. As a result, signals with a modulation amplitude of 72% were recorded with 9.9 W. The modulation amplitude is considered to be further increased by optimizing the recording conditions such as the pulse strategy.

### COMPARATIVE EXAMPLE 3

For comparison, the following compound (10) was prepared, and evaluation as an optical recording medium was carried out.

### (a) Preparation Example

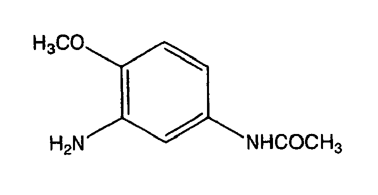

The above 3-amino-4-methoxyacetanilide and 1,5-dibromopentane were cyclized under the same reaction conditions as in the reaction of the compound (4) of Example 1 and n-propyl iodide, to obtain the following compound.

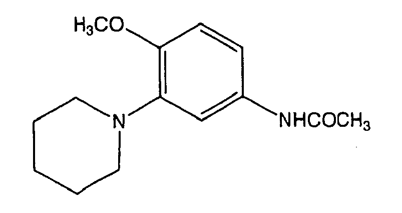

Then, it was heated in a sulfuric acid aqueous solution to hydrolyze the acetyl group to obtain 3-piperidino-4-methoxyaniline, which was cyclized under the same conditions as for the compound (7) and ethyl acetoacetate in the above Example 1, to obtain the following compound (10).

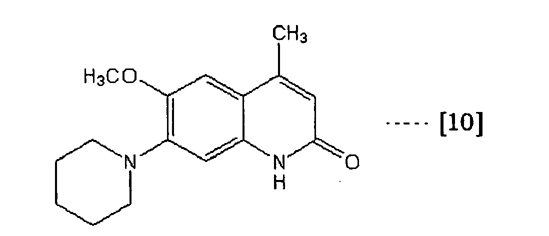

The obtained compound (10) had a λmax in chloroform of 370 and 358 nm and a molar absorptivity of 1.5×10⁴ and 1.6×10⁴.

### (b) Example for optical recording medium

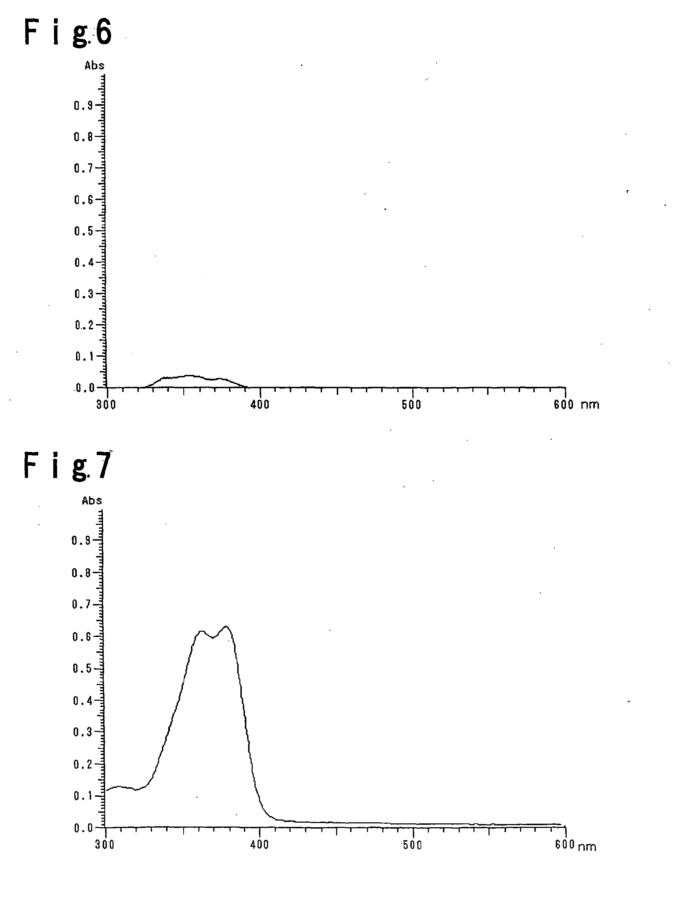

The compound (10) was dissolved in octafluoropentanol and adjusted to 1 wt%. This solution was filtered, and the obtained solution was dropped on an injection molded polycarbonate resin substrate having a diameter of 120 mm and a thickness of 0.6 mm, coated by a spinner method (500 rpm) and then dried at 100°C for 30 minutes. This coating film had a maximum absorption wavelength (λmax) of 354.5 and 373 nm, and as compared with the compound of a structure not fused with an oxygen atom, λmax was short, and thus it had no absorption at 405 nm. Further, ε was low, and thus, the absorption when made into a thin film, was small. The spectrum was shown in Fig. 6.

Namely, it is evident that even the carbostyril compound having an amino group at the 7-position and a hetero atom at the 6-position, is a dye compound inadequate for recording by a blue laser beam, if it does not have a structure wherein they are fused to each other to form a ring.

### COMPARATIVE EXAMPLE 4

### (a) Preparation Example

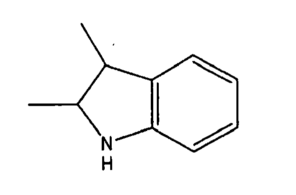

The above 2,3-dimethylindoline was isopropylated under the same reaction conditions as in the reaction of the compound (4) and n-propyl iodide in Example 1, followed by nitration, reduction and cyclization under the same conditions to obtain the following compound (11).

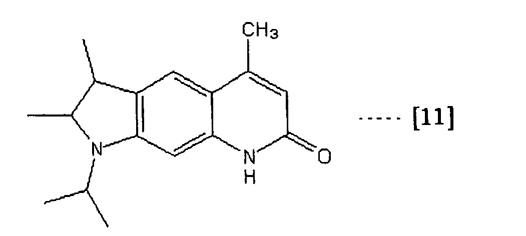

This compound (11) had a λmax in chloroform of 377 nm and a molar absorptivity of 2.6×10⁴.

### (b) Evaluation of optical recording medium

The illustrated compound (58) was dissolved in octafluoropentanol and adjusted to 1 wt%. This solution was filtered, and the obtained solution was dropped on an injection molded polycarbonate resin substrate having a diameter of 120 mm and a thickness of 1.2 mm, coated by a spinner method and then dried at 100°C for 30 minutes. This coating film had a maximum absorption wavelength (λmax) of 378.5 nm. The results are shown in Fig. 7 together with the spectrum in Example 3.

As is evident from the comparison of the spectrum, it is evident that the spectrum of the coating film of this compound showed only a small absorption at 405 nm. Namely, even if the carbostyril compound having an amino group at the 7-position and a hetero atom at the 6-position, has a structure where they are fused to each other to form a ring, if X in the formula (I) is a carbon atom, λmax is shorter, and absorption at 405 nm is smaller than the compound recorded in Examples 2 and 3 (X=oxygen atom), whereby it is required to carry out recording by a high power laser for recording.

The entire disclosure of Japanese Patent Application No. 2003-433328 filed on December 26, 2003 including specification, claims, drawings and summary is incorporated herein by reference in its entirety.

## Claims

1. An optical recording medium comprising a substrate and a recording layer formed on the substrate, capable of recording or readout of information by irradiation with light, wherein the recording layer contains a 7-aminocarbostyril compound of the following formula (I): 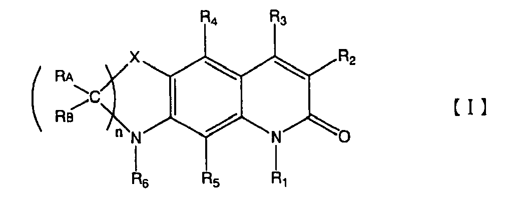 in the formula (I), X is an oxygen atom, a sulfur atom or NR₇, each of R₁, R₆ and R₇ which are independent of one another, is a hydrogen atom, a linear or branched alkyl group, a cyclic alkyl group, an aralkyl group, a linear or branched alkenyl group or an acyl group of -COR₁₆, R₁₆ is a hydrocarbon group or a heterocyclic group, each of R₂, R₃ R₄ and R₅ which are independent of one another, is a hydrogen atom or an optional substituent, each of R_{A} and R_{B} which are independent of each other, is a hydrogen atom, a C₁₋₁₂ linear or branched alkyl group, n is from 1 to 4, A in R_{A} is an even number among from 8 to 7+2n, B in R_{B} is an odd number among from 8 to 7+2n, and when n is from 2 to 4, the plurality of each of R_{A} and R_{B} may be different from one another, provided that among from R₁ to R₇, adjacent substituents may be bonded to each other to form a fused ring.

2. The optical recording medium according to Claim 1, wherein in the 7-aminocarbostyril compound of the following formula (I), each of R₁, R₆ and R₇ which are independent of one another, is selected from the group consisting of a hydrogen atom, a C₁₋₁₂ linear or branched alkyl group, a C₃₋₁₂ cyclic alkyl group, an acyl group of -COR₁₆ and a C₇₋₁₈ aralkyl group.

3. The optical recording medium according to Claim 1, wherein in the 7-aminocarbostyril compound of the following formula (I), each of R₂, R₃ R₄ and R₅ which are independent of one another, is selected from the group consisting of a hydrogen atom, a C₁₋₁₂ linear or branched alkyl group, a C₃₋₁₂ cyclic alkyl group, a C₂₋₁₂ linear or branched alkenyl group, a C₇₋₁₈ aralkyl group, a C₁₋₁₂ linear or branched alkoxy group, a C₁₋₁₂ linear or branched alkylthio group, a C₆₋₁₈ aryl group, a saturated or unsaturated heterocyclic group, a halogen atom, a nitro group, a cyano group, a mercapto group, a hydroxyl group, a formyl group, an acyl group of -COR₁₆, an amino group of -NR₁₇R₁₈, an acylamino group of -NHCOR₁₉, a carbamate group of -NHCOOR₂₀, a carboxylate group of - COOR₂₁, an acyloxy group of -OCOR₂₂, a carbamoyl group of -CONR₂₃R₂₄, a sulfonyl group of -SO₂R₂₅, a sulfinyl group of -SOR₂₆, a sulfamoyl group of -SO₂NR₂₇R₂₈, a sulfonate group of -SO₃R₂₉ and a sulfonamide group of -NHSO₂R₃₀ (wherein each of R₁₆, R₁₉, R₂₀, R₂₁, R₂₂, R₂₅, R₂₆, R₂₉ and R₃₀ is a hydrocarbon group or a heterocyclic group, and each of R₁₇, R₁₈, R₂₃, R₂₄, R₂₇ and R₂₈ is a hydrogen atom, a hydrocarbon group or a heterocyclic group), and among from R₁ to R₇, adjacent substituents may be bonded to each other to form a fused ring.

4. The optical recording medium according to Claim 3, wherein in the 7-aminocarbostyril compound of the following formula (I), each of R₂ and R₃ which are independent of each other, is selected from the group consisting of a hydrogen atom, a C₁₋₈ linear or branched alkyl group, a C₃₋₈ cyclic alkyl group, a C₇₋₁₂ aralkyl group, a C₁₋₈ linear or branched alkoxy group, a C₁₋₈ linear or branched alkylthio group, a C₆₋₁₈ aryl group, a saturated or unsaturated single ring or double fused ring heterocyclic group, a halogen atom, a nitro group, a cyano group, a mercapto group, a hydroxyl group, a formyl group, an acyl group of -COR₁₆, an amino group of -NR₁₇R₁₈, an acylamino group of -NHCOR₁₉, a carbamate group of - NHCOOR₂₀, a carboxylate group of -COOR₂₁, an acyloxy group of -OCOR₂₂, a carbamoyl group of -CONR₂₃R₂₄ and a sulfonamide group of -NHS0₂R₃₀.

5. The optical recording medium according to Claim 1, wherein in the 7-aminocarbostyril compound of the following formula (I), n is from 2 to 3.

6. The optical recording medium according to Claim 1, wherein in the 7-aminocarbostyril compound of the following formula (I), X is an oxygen atom or NR₇.

7. The optical recording medium according to Claim 1, wherein in the 7-aminocarbostyril compound of the following formula (I), n is 2.

8. The optical recording medium according to Claim 1, wherein in the 7-aminocarbostyril compound of the following formula (I), X is an oxygen atom or NR₇, R₁ is a hydrogen atom or a C₁₋₈ linear or branched alkyl group, each of R₆ and R₇ which are independent of each other, is a C₁₋₈ linear or branched alkyl group or a C₃₋₁₀ cyclic alkyl group, and n is 2.

9. The optical recording medium according to Claim 1, wherein the light is a laser beam having a wavelength of from 350 to 530nm.

10. A dye comprising a 7-aminocarbostyril compound of the following formula (I): 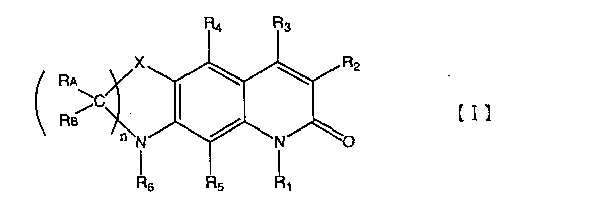 in the formula (I), X is an oxygen atom or NR₇, R₁ is a hydrogen atom or a C₁₋₄ linear or branched alkyl group, each of R₂ and R₃ which are independent of each other, is a hydrogen atom, a C₁₋₈ linear or branched alkyl group, a C₁₋₈ linear or branched alkoxy group, a halogen atom, a C₇₋₁₂ aralkyl group, an unsaturated heterocyclic group or an aryl group, each of R₄ and R₅ is a hydrogen atom, each of R₆ and R₇ which are independent of each other, is an unsaturated C₁₋₈ linear or branched alkyl group or a cyclic alkyl group, each of R_{A} and R_{B} which are independent of each other, is a hydrogen atom, a C₁₋₁₂ linear or branched alkyl group, n is from 1 to 4, A in R_{A} is an even number among from 8 to 7+2n, B in R_{B} is an odd number among from 8 to 7+2n, and when n is from 2 to 4, the plurality of each of R_{A} and R_{B} may be different from one another, provided that among from R₁ to R₇, adjacent substituents may be bonded to each other to form a fused ring.
